# EUROPÄISCHE PATENTSCHRIFT

(11) **EP 3 682 132 B1**
(45) Veröffentlichungstag und Bekanntmachung des Hinweises auf die Patenterteilung: **03.03.2021**
(21) Anmeldenummer: 17781006.6
(22) Anmeldetag: 12.09.2017
(51) Int. Cl.: F16D 41/14

(54) **FREILAUFKUPPLUNG MIT REIBUNGSINDUZIERTER STELLKRAFT**
OVERRUNNING CLUTCH HAVING A FRICTION-INDUCED ACTUATING FORCE
EMBRAYAGE À ROUE LIBRE PRÉSENTANT UNE FORCE DE RÉGLAGE INDUITE PAR FROTTEMENT

(43) Veröffentlichungstag der Anmeldung: 22.07.2020
(73) Patentinhaber: GKN AUTOMOTIVE LTD., Birmingham Business Park Birmingham West Midlands B37 7YE (GB)
(72) Erfinder: BEIGANG, Wolfgang, 53819 Neunkirchen-Seelscheid (DE); WECKERLING, Thomas, 53757 Sankt Augustin (DE); WERKHAUSEN, Maximilian, 50739 Köln (DE); HAUPT, Jan, 51515 Kürten (DE); GÜTH, Dirk, 53757 St. Augustin (DE)
(74) Vertreter: btb IP Bungartz Baltzer Partnerschaft mbB Patentanwälte
(86) Internationale Anmeldenummer: PCT/EP2017/072882
(87) Internationale Veröffentlichungsnummer: WO 2019/052636

(56) Entgegenhaltungen:
- DE-A1-102017 104 053
- DE-T5-112015 001 203
- US-A- 1 396 343

## Beschreibung

Die Erfindung betrifft eine selbstschaltende Freilaufkupplung, die für den Einsatz in einem Antriebsstrang eines Kraftfahrzeugs, insbesondere bei einem Personenkraftwagen (PKW), eingerichtet ist.

Freilaufkupplungen, die ein freies Drehen von zwei Kupplungsgliedern relativ zueinander in einer Freilaufdrehrichtung ermöglichen und die in einer der Freilaufdrehrichtung entgegengesetzten Drehbeanspruchung (Lastdrehrichtung) eine drehfeste Verbindung zwischen den beiden Kupplungsgliedern herstellen, sind dem Fachmann bekannt. Freilaufkupplungen können als Überholkupplungen oder als Rücklaufsperren eingesetzt werden.

Freilaufkupplungen kommen am häufigsten mit federbelasteten Sperrklinken zum Einsatz, die verschwenkbar an einem der beiden Kupplungsglieder oder an einem zwischen den beiden Kupplungsgliedern angeordneten Zwischenglied gelagert sind und in Abhängigkeit der Richtung einer Relativdrehung der Kupplungsglieder zueinander zur Herstellung einer drehfesten Verbindung in einer der Freilaufrichtung entgegengesetzten Drehbeanspruchung (in Lastdrehrichtung) mit Anschlägen lastabstützend in Anlage kommen oder bei Beanspruchung der Freilaufkupplung in Freilaufdrehrichtung die Anschläge hingegen überstreichen, ohne eine Drehung der Kupplungsglieder relativ zueinander zu blockieren.

Eine alternative Ausgestaltung von Freilaufkupplungen sieht zwischen den Kupplungsgliedern ein mit den Kupplungsgliedern zusammenwirkendes Zwischenglied vor, das bei Beanspruchung der Kupplung in einer der Freilaufrichtung entgegengesetzten Drehbeanspruchung (Lastdrehrichtung) eine lastübertragende Stellung einnimmt, in der es über Eingriffspaarungen mit beiden Kupplungsgliedern in Eingriff steht. Ein Antriebs- oder Abstützmoment wird von einem Kupplungsglied auf das Zwischenglied und vom Zwischenglied auf das andere Kupplungsglied übertragen. Zur Gewährleistung eines Freilaufs wird das Zwischenglied über einen Steuermechanismus aus der lastübertragenden Stellung in eine den Freilauf gewährleistende Stellung überführt, in der der lastabstützende Eingriff zwischen dem Zwischenglied und zumindest einem der beiden Kupplungsglieder aufgehoben ist. Der Steuermechanismus derartiger Kupplungen weist Steuerklinken auf, die im Gegensatz zu lastabstützenden Sperrklinken keine nennenswerte lastübertragende Funktion, sondern lediglich eine Steuerungs- und Synchronisierungsfunktion zur Initiierung der Überführung des Zwischengliedes aus der Freilaufposition in die Eingriffsposition haben. Derartige Freilaufkupplungen sind in der DE 763 479 oder der DE 2 354 332 offenbart.

Die Erfindung betrifft sowohl Kupplungen, die mit lastübertragenden Sperrgliedern, insbesondere Sperrklinken, arbeiten, als auch solche, bei denen Steuerglieder, insbesondere Steuerklinken, zum Einsatz kommen, die lediglich die Betätigung eines letztlich lastübertragenden Zwischenglieds initiieren. Ferner umfasst die Erfindung sowohl Freilaufkupplungen, die als Überholkupplungen eingesetzt werden, als auch solche, die als Rücklaufsperre eingesetzt werden. Nachfolgend wird, sofern eine ausdrückliche Differenzierung nicht erforderlich ist, sowohl für das lastübertragende Sperrglied als auch für das weitestgehend lastfrei agierende Steuerglied übergreifend der Begriff Schaltglied verwendet.

Ein bei der Ausgestaltung von Freilaufkupplungen zu beachtender Aspekt ist die Frage der Steuerung der Schaltgliedstellungen. Unabhängig von der Bauart der Freilaufkupplung müssen die Schaltglieder gewährleisten, dass in Freilaufdrehrichtung ein freies Drehen der Kupplungsglieder zueinander möglich ist, während in Lastdrehrichtung die Schaltglieder dauerhaft eine lastabstützende Stellung (Sperrglieder) oder zumindest zeitweilig eine einen Steuerimpuls abstützende Stellung (Steuerglieder) einnehmen müssen, um mittels des Schaltglieds entweder das Lastdrehmoment übertragen zu können (Sperrglied-Bauart), oder um die Verlagerung des Zwischenglieds (Steuerglied-Bauart) initiieren zu können. Nachfolgend wir die lastabstützende Stellung der Sperrglieder und die einen Steuerimpuls abstützende Stellung der Steuerglieder übergreifend als Eingriffsstellung bezeichnet.

Am üblichsten ist es, die Schaltglieder als schwenkbar gelagerte Klinken auszuführen und dauerhaft federbelastet gegen Anschläge, insbesondere radial gegen einen sich über einen Umfang erstreckenden Anschlagkranz mit einer Vielzahl von einzelnen Anschlägen, anzustellen und derart auszurichten, dass die Klinken in Freilaufdrehrichtung die Anschläge überstreichen, bei einem Wechsel in die Lastdrehrichtung aber mit den Anschlägen abstützend zusammenwirken. Diese Ausführungsform wird als nachteilig angesehen, weil das Überstreichen der Anschläge bei in Freilaufdrehrichtung beanspruchter Kupplung durch die dauerhaft hiergegen angestellten Klinken ein für viele Freilaufkupplungen typisches Geräusch erzeugt, das bei zunehmend größer und stabiler ausgelegten Kupplungen zunehmend lauter wird und für viele Anwendungen inakzeptabel störend sein kann.

Bei mit Sperrklinken arbeitenden Freilaufkupplungen kommt hinzu, dass das in Lastrichtung zu übertragende Drehmoment über die Sperrklinken abzustützen ist. Die Sperrklinken haben als relativ filigran auszugestaltende Bauteile, die schwenkbar und federbelastet innerhalb der Kupplung über noch filigranere Bauteile zu lagern sind, nur ein geringes Drehmomentübertragungspotential. Dies gilt umso mehr dann, wenn die Wirkdurchmesser, auf denen die Sperrklinke auf die Kupplungsglieder wirkt, gering sind und ein zu übertragendes Moment über einen geringen Hebelarm abgestützt werden muss.

Aus der Druckschrift US 8,210,331 B2 ist eine Freilaufkupplung nach Sperrglied-Bauart bekannt, bei der eine nicht federbelastete Sperrklinke über einen Schwenkachsbolzen an einem Klinkenring, der relativ zu beiden Kupplungsgliedern begrenzt drehbar ist, verschwenkbar positionsgelagert ist, wobei die Sperrklinke lose mit dem momenteinleitenden inneren Kupplungsglied in Eingriff steht und - je nach Drehrichtung des momenteinleitenden inneren Kupplungsglieds - infolge eines Verdrehens dieses inneren Kupplungsglieds in Relation zum Klinkenring, der innerhalb des mehrteiligen momentaufnehmenden, äußeren Kupplungsglieds aufgenommen ist, eine lastabstützende Stellung oder eine einen Freilauf gewährleistende Stellung einnimmt. Diese Konstruktion vermeidet zwar, dass die Sperrklinken federbelastet gegen Mitnahmeanschläge angestellt werden müssen und daher auch eine hiermit ansonsten verbundene Geräuschentwicklung. Allerdings ist das Drehmoment über die filigranen Sperrklinken zu übertragen, so dass ein hinreichendes Drehmomentübertragungspotential bei einer für den Einsatz in einem Kraftfahrzeugantriebsstrang anzustrebenden Kompaktheit nicht erreicht werden kann. Außerdem baut die Freilaufkupplung komplex und wenig kompakt. Bei in Freilaufdrehrichtung beanspruchter Kupplung wird der Klinkenring über die Sperrklinken vom momenteinleitenden Kupplungsglied mitgeschleppt, so dass bei ungleichförmigem Lauf des inneren antreibenden Kupplungsglieds die Gefahr besteht, dass der Klinkenring trägheitsbedingt gegenüber dem inneren Kupplungsglied hin und her schlägt und die Sperrklinken ständig Stöße abfangen müssen.

Aus der Druckschrift US 1,396,343 ist eine Sperrklinken-Freilaufkupplung bekannt, bei der eine Sperrklinke an zwischen zwei Kupplungsgliedern angeordneten Reibscheiben mittels Schwenkachsbolzen verschwenkbar positionsgelagert ist. Je nach Drehrichtung der Kupplung führt ein Zusammenwirken von Kupplungsgliedern, Reibscheiben und Sperrklinke dazu, dass die Sperrklinken durch ein Kupplungsglied in eine lastabstützende Stellung oder in eine den Freilauf gewährleistende Stellung hineingedrängt werden. Bei in Freilaufstellung befindlicher Sperrklinke drehen sich die Reibscheiben relativ zu einem Kupplungsglied in der sich zwischen den Kupplungsgliedern einstellenden Differenzdrehzahl. Die Reibscheiben verursachen in Freilaufdrehrichtung eine hohe Verlustreibung und die Konstruktion birgt die Gefahr, dass die Reibscheiben zwischen den Kupplungsgliedern festgehen, insbesondere bei hoher thermischer Belastung infolge hoher Differenzdrehzahlen zwischen den Kupplungsgliedern und/oder im Falle des Eindringens von Fremdkörpern, Schmutz oder Abrieb zwischen Reibscheibe und dem hierzu benachbarten Bauteil. Außerdem drängen die Sperrklinken bei in Freilaufdrehrichtung beanspruchter Freilaufkupplung fliehkraftbedingt mit hoher Kraft nach außen, was in bestimmten Lastwechselsituationen zu einem starken und daher inakzeptabel lauten Anschlagen der Sperrklinken gegen an dem äußeren Kupplungsglied vorgesehene Anschlagflächen führt. Hinzu kommt, dass eine die Verlagerung der Sperrklinken bedingende Stellkraft von den Kupplungsgliedern selbst auf die Sperrklinken ausgeübt wird und die sich infolge des In-Kontakt-Stehens ergebenden Reibkräfte zwischen Kupplungsgliedern und Sperrklinken der bei einer Änderung eines Lastzustandes angestrebten Sperrklinkenverstellung hemmend entgegenwirken können.

Aus der Patentschrift DE 632 395 ist eine Freilaufkupplung bekannt, bei der eine Sperrklinke an einem Kupplungsglied der Freilaufkupplung verschwenkbar gelagert ist und über Reibhebel mit Reibringen, die an dem anderen Kupplungslied angeordnet sind und sich mit diesem mitdrehen, in Reibkontakt steht. Durch die mit den Reibringen in Reibkontakt stehenden Reibhebel, die als Hebelarm fungieren, wird bei Vorliegen einer Differenzdrehzahl zwischen den Kupplungsgliedern ein Stellmoment auf die Sperrklinke ausgeübt, durch das diese aus einer einen Freilauf gewährleistenden Stellung in eine lastabstützende Stellung oder umgekehrt gedrängt wird. Diese Konstruktion hat zum einen den Nachteil, dass bei Vorliegen einer Differenzdrehzahl Reibringe und Reibhebel dauerhaft aneinander reiben, so dass zu befürchten ist, dass es im Laufe der Zeit zu Abnutzungserscheinungen kommt, durch die die Klinkensteuerung beeinträchtigt sein kann. Zum anderen ist es bei der in der DE 632 395 gezeigten Ausgestaltung erforderlich, dass die Reibhebel die Klinkenanschläge seitlich übergreifen, was zusätzlichen axialen Bauraum und das Vorsehen von axial außerhalb der Klinkenanschläge liegenden Reibflächen an den Kupplungsgliedern erforderlich macht, so dass die Integration einer derartigen Freilaufkupplung in eine kompakte Baugruppe erschwert sein kann.

Für Anwendungen im Kraftfahrzeugbau, insbesondere für Anwendungen in einem Teil eines Antriebsstrangs, die bedingt durch das Vorsehen von Untersetzungsstufen ein hohes Drehmomentübertragungspotential erfordern und bei denen außerdem eine besonders kompakte, platzsparend in die umgebende Antriebsstrangarchitektur zu integrierende, leicht zu fertigende und wenig störanfällige Freilaufkupplung wünschenswert ist, die schnell und mit geringen zu bewegenden Massen und kleinen mechanischen Schaltimpulsen schaltet und einen geräuschlosen Freilauf zur Verfügung stellen soll, sind die vorstehend beschriebenen Freilaufkupplungen nur bedingt geeignet.

Andere Freilaufkupplungen sind aus DE 10 2017 104 053 A1 und DE 11 2015 001 203 T5 bekannt.

Der Erfindung liegt die Aufgabe zugrunde, eine für den Einsatz in einem Antriebsstrang eines Kraftfahrzeugs, insbesondere in einer bevorzugt elektromotorisch angetriebenen Achsantriebseinheit mit einem schaltbaren Zwei-Gang-Planetengetriebe, besonders geeignete und wenig störanfällige selbstschaltende Freilaufkupplung zur Verfügung zu stellen, die ein hohes Drehmoment zu übertragen vermag, kompakt aufbaut, leicht zu fertigen ist und auch in Freilaufdrehrichtung weitgehend geräuschlos arbeitet. Die bei einem Schaltvorgang zu bewegenden Massen sollen dabei klein gehalten werden. Es ist insbesondere eine Aufgabe der Erfindung, eine Schaltgliedbetätigung zu schaffen, mit der sich die genannten Zielsetzungen besonders effektiv und vorteilhaft umsetzen lassen.

Die Erfindung sieht eine Freilaufkupplung vor mit einem momenteinleitenden Kupplungsglied, einem momentaufnehmenden Kupplungsglied und mit einem Schaltglied, das abhängig von der Richtung einer hinreichenden Änderung der zwischen momenteinleitendem und momentaufnehmendem Kupplungsglied herrschenden Drehwinkelstellung mittels einer von einem Stellglied auf das Schaltglied ausgeübten Stellkraft aus einer Eingriffsstellung in eine Freilaufstellung gedrängt wird, um einen freies Drehen der Kupplungsglieder zueinander in einer Freilaufdrehrichtung mittelbar oder unmittelbar herzustellen, oder aus einer Freilaufstellung in eine Eingriffsstellung gedrängt wird, um eine drehfeste Kopplung der Kupplungsglieder mittelbar oder unmittelbar herzustellen.

Dabei ist vorgesehen, dass die Stellkraft eine reibkraftinduzierte Stellkraft ist, die durch eine Reibkraftpaarung zwischen Stellglied und einem hierzu in Reibkontakt stehenden Bauteil der Freilaufkupplung induziert ist und das Stellglied einen formschlüssig wirkenden Stellanschlag ausbildet, über den die Stellkraft mittelbar oder unmittelbar auf das Schaltglied wirkt.

Dass die Stellkraft eine reibkraftinduzierte Stellkraft ist, die durch eine Reibkraftpaarung zwischen Stellglied und einem hierzu in Reibkontakt stehenden Bauteil der Freilaufkupplung induziert ist, bedeutet insbesondere, dass die Reibkraft, die zwischen dem Stellglied und dem Bauteil, mit dem es in Reibkontakt steht, in den relevanten Betriebszuständen entsteht, für die Kraft, die das Stellglied erfährt und die es als Stellkraft über den Stellanschlag mittelbar oder unmittelbar auf das Schaltglied weiterzugeben vermag, ursächlich ist. Dass die Stellkraft reibkraftinduziert ist, bedingt ferner, dass das Stellglied ein von dem Bauteil, mit dem es eine Reibpaarung bildet, separates Bauteil ist, und dass sich zwischen dem Stellglied und dem Bauteil, mit dem das Stellglied eine Reibpaarung bildet, eine Differenzdrehzahl einstellen kann und das Stellglied und dieses Bauteil relativ zueinander drehbeweglich sind.

Dass das Stellglied einen Stellanschlag aufweist, bedeutet, dass das Stellglied zur Übertragung der Stellkraft insbesondere über eine Stellkante formschlüssig wirkend unmittelbar oder mittelbar mit dem Schaltglied in Anlage kommt, um ein Stellmoment auf das Schaltglied auszuüben. "Unmittelbar" bedeutet in diesem Zusammenhang, dass der Steueranschlag direkt auf das Schaltglied wirkt, "mittelbar" bedeutet in diesem Zusammenhang, dass zwischen Schaltglied und Stellanschlag Zwischenelemente vorgesehen sein können, über die die Stellkraft vom Stellglied auf das eigentliche Schaltglied weitergeleitet wird. Der Stellanschlag ist bevorzugt als doppelseitig wirkender Stellanschlag ausgebildet, so dass auf das Schaltglied Stellkräfte in zwei entgegengesetzten Wirkrichtungen ausgeübt werden können.

Bevorzugt ist das Schaltglied an einem vom Stellglied separaten Bauteil der Freilaufkupplung positionsgelagert. Dies bedeutet, dass die zur Funktion der Kupplung korrekte Positionierung und Abstützung des Schaltgliedes innerhalb der Freilaufkupplung, nicht durch das Stellglied gewährleistet wird, sondern das Stellglied lediglich eine tangential in Umfangsdrehrichtung wirkende Stellkraft für die Überführung des Schaltgliedes aus der Freilaufstellung in die Eingriffsstellung (oder umgekehrt) auf das Schaltglied ausübt. Das positionsgetreue Halten des Schaltgliedes innerhalb der Freilaufkupplung, insbesondere eine radial nach innen und radial nach außen wirksame Lagerung des Schaltgliedes, muss hingegen nicht allein über das das Stellglied gewährleistet werden. Hierfür kann ein vom Stellglied separates Bauteil herangezogen werden, bevorzugt ein Kupplungsglied und/oder ein Zwischenglied (letzteres bei der Steuerglied-Bauart), an dem das Stellglied positionsgelagert ist. Insbesondere ist es nicht erforderlich, dass das Schaltglied am durch die Reibkraft beaufschlagten Stellglied schwenkgelagert ist. Das Schaltglied oder ein hiermit zusammenwirkendes Zwischenelement kann lediglich lose, bevorzugt in radialer Richtung, in das Stellglied eintauchen und mit nur in Umfangsrichtung wirkenden Stellkanten mit dem Stellglied in Kontakt stehen, um ein Stellmoment auf das Schaltglied auszuüben und dieses um seine Schwenkachse zu verschwenken. Dies ermöglicht eine deutlich vereinfachte und insbesondere kompakte Konstruktion des Stellglieds, da auf eine Schwenkachslagerung, die Schaltglied und Stellglied dauerhaft in Eingriff miteinander setzt, verzichtet werden kann und weil das Stellglied radial außerhalb oder radial innerhalb einer Schwenkachse des Schaltglieds, um die es bei einem Verschwenken von der Freilaufstellung in die Eingriffsstellung (oder umgekehrt) schwenkt, angeordnet sein kann.

Dass bei der Freilaufkupplung ein Schaltglied die freie Drehbarkeit der Kupplungsglieder zueinander oder eine drehfeste Kopplung zwischen den Kupplungsglieder mittelbar oder unmittelbar herzustellen vermag, bedeutet, dass entweder das Schaltglied ein lastübertragendes Sperrglied ist und die drehfeste Kopplung (Sperrglied in Eingriffsstellung) oder die freie Drehbarkeit (Sperrglied in Freilaufstellung) unmittelbar durch die Schaltgliedstellung selbst hergestellt wird (das lastübertragende Schaltglied selbst wechselt als Sperrglied zwischen Eingriffsstellung und Freilaufstellung hin und her), oder dass das Schaltglied lediglich ein Steuerglied ist und die drehfeste Kopplung bzw. freie Drehbarkeit der der Kupplungsglieder zueinander dadurch mittelbar hergestellt wird, dass das Schaltglied lediglich die Überführung eines Zwischenglieds aus einer lastübertragenden Stellung in eine freilaufgewährende Stellung (oder umgekehrt) initiiert.

Die vorstehend beschriebene Ausgestaltung einer Freilaufkupplung ermöglicht gegenüber den aus dem Stand der Technik bekannten Freilaufkupplungen die Realisierung einer ganzen Reihe von Vorteilen.

Bei den vorstehenden und nachfolgenden Erläuterungen ist zu berücksichtigen, dass hinsichtlich der Zuordnung der Funktionen einer Freilaufkupplung zu den einzelnen Kupplungsgliedern vielfältige Möglichkeiten bestehen, insbesondere dass die Freilaufkupplung als Überholkupplung oder als Rücklaufsperre eingesetzt werden kann, und dass das momenteinleitende erste Kupplungsglied ein inneres Kupplungsglied und das momentaufnehmende Kupplungsglied ein äußeres Kupplungsglied oder das momenteinleitende Kupplungsglied ein äußeres Kupplungsglied und das momentaufnehmende Kupplungsglied ein inneres Kupplungsglied sein kann.

Das momenteinleitende Kupplungsglied ist dabei das treibende Kupplungsglied, über das dann, wenn die Kupplung in Lastdrehrichtung beaufschlagt ist, Moment in die Kupplung eingeleitet wird. Das momentaufnehmende Kupplungsglied ist das getriebene oder abstützende Kupplungsglied, das dann, wenn die Kupplung in Lastdrehrichtung beaufschlagt ist, Drehmoment empfängt und entweder mit gleicher Drehzahl durch das momenteinleitende Kupplungsglied angetrieben wird (Überholkupplung) oder - im Fall einer Rücklaufsperre - eine Drehung des momenteinleitenden Kupplungsgliedes beispielsweise gegenüber einem ortsfesten Gehäuse blockiert.

Eine vorteilhafte Ausgestaltung ergibt sich dann, wenn das Stellglied mit dem momenteinleitenden Kupplungsglied und/oder einem hierzu drehfesten Bauteil eine Reibpaarung bildet und das Schaltglied am momentaufnehmenden Kupplungsglied, einem hierzu drehfesten Bauteil und/oder an einem mit dem momentaufnehmenden Kupplungsglied in Eingriff stehenden Zwischenglied positionsgelagert ist. Diese Ausgestaltung führt dazu, dass sich das Schaltglied bei in Freilaufdrehrichtung beanspruchter Kupplung mit derselben Drehzahl um die Rotationsachse dreht, mit der sich das momentaufnehmende Kupplungsglied um die Rotationsachse dreht. Ist das momentaufnehmende Kupplungsglied Teil einer als Rücklaufsperre fungierenden Freilaufkupplung, steht das Schaltglied zusammen mit dem momentaufnehmenden Kupplungsglied still, während das momenteinleitende Kupplungsglied gegenüber dem Stellglied rotiert und das Schaltglied durch die darauf wirkende Stellkraft reibkraftinduziert und dauerhaft in die Freilaufstellung gedrängt wird, so dass ein Anschlagen des Schaltgliedes gegen Anschläge vermieden ist.

Um sicherzustellen, dass durch die Reibkraftpaarung einerseits eine hinreichende Reibkraft induziert wird, andererseits diese Reibkraft zur möglichst weitgehenden Vermeidung von Verlustleistung aber nicht über das erforderliche Maß hinausgeht, kann vorgesehen sein, dass am Stellglied ein oder mehrere Vorspannelemente, beispielsweise Vorspannfedern, vorgesehen sind, über deren Auswahl die die Reibkraft gezielt beeinflussbar ist. Das Stellglied kann mehrteilig ausgeführt sein und die Vorspannelemente können zwischen einzelnen Stellgliedteilen wirken, oder das Stellglied kann einteilig ausgebildet sein und die Vorspannelemente können integraler Bestandteil des Stellglieds sein, insbesondere werkstoffeinstückig mit diesem ausgebildet sein. Insbesondere die letztgenannte Ausgestaltung ermöglicht im Zusammenhang mit der Überlegung, dass das Stellglied keine Positionslagerung des Schaltglieds gewährleisten muss (insbesondere keine Schwenkachslagerung) eine Stellgliedkonstruktion, bei der ein sehr flach bauendes Stellglied zum Einsatz kommen kann.

Das Stellglied steht ferner bevorzugt ausschließlich mit einem Kupplungsglied und/oder einem zu diesem Kupplungsglied drehfesten Bauteil in Reibkontakt, nicht aber auch mit dem jeweils anderen Kupplungsglied oder einem hierzu drehfesten Bauteil, so dass die für die Stellkraft maßgebliche Reibkraft nur Reibkraftpaarungen ursächlich sind, die zwischen Stellglied auf der einen und miteinander drehfest verbundenen Bauteilen auf der anderen Seite maßgeblich sind. Dies vermeidet, dass sich im Betrieb mehrere unterschiedlich drehende Bauteile auf das Stellglied einwirken, deren Reibkräfte sich gegenseitig hemmen und so die reibkraftinduzierte Schaltgliedverstellung beeinträchtigen könnten.

Das Stellglied ist bevorzugt als Stellring ausgeführt und innenseitig bzw. außenseitig benachbart einer inneren bzw. äußeren Radialfläche eines Kupplungsglieds oder eines hierzu drehfesten Bauteils angeordnet. Das Stellglied kann insbesondere eine nach außen weisende Radialfläche außenseitig umspannen. Es kann aber auch vorgesehen sein, dass das Stellglied innenseitig einer radial nach innen weisenden Radialfläche in das äußere Kupplungsglied eingepasst ist.

Die Reibkrafterzeugung zwischen Stellglied und dem zum Stellglied benachbarten Bauteil der Freilaufkupplung kann über Paarungen von zueinander benachbarten Axialflächen und/oder über Paarungen von zueinander benachbarten Radialflächen erfolgen. Bevorzugt ist aber vorgesehen, dass die die Stellkraft induzierende Reibkraftpaarung über Axialflächenpaarungen realisiert ist und die Reibkraft über am Stellglied vorgesehene Axialflächen in das Stellglied eingeleitet werden. Hierzu kann das Stellglied axiale Reibflächen ausbilden, die über die Vorspannelemente gegen benachbarte Axialflächen definiert angestellt sind. Diese Ausgestaltung, bei der in axialer Richtung wirkenden Vorspannelemente zum Einsatz kommen, hat insbesondere auch den Vorteil, dass etwaige Fliehkräfte keinen unmittelbaren Einfluss auf die Reibkraft haben und die Stellkraft so nicht nennenswert beeinflussen können. Die Reibkraft ist weitgehend drehzahlunabhängig.

Bevorzugt übergreift das äußere Kupplungsglied das innere Kupplungsglied unter Bildung eines zwischen äußerem und innerem Kupplungsglied befindlichen Ringraums, wobei das Stellglied bevorzugt zumindest teilweise innerhalb dieses Ringraums angeordnet ist. Es kann ferner vorgesehen sein, dass das Stellglied zumindest teilweise, bevorzugt vollständig, radial innenseitig der am äußeren Kupplungsglied vorgesehenen und bei in Lastdrehrichtung beanspruchter Kupplung momentübertragenden Eingriffsbreite angeordnet ist. Die am äußeren Kupplungsglied vorgesehene Eingriffsbreite ist die wirksame Breite des die Momentübertragung vom äußeren Kupplungsglied oder auf das äußere Kupplungsglied gewährleistenden Eingriffs zwischen entweder einem Sperrglied oder einem über ein Steuerglied betätigten Zwischenglied auf der einen Seite und dem äußeren Kupplungsglied auf der anderen Seite.

Zur Ausbildung des Stellanschlags am Stellglied sind bevorzugt zwei in entgegengesetzte Richtungen wirkende Stellkanten am Stellglied vorgesehen, die zur mittelbaren oder unmittelbaren Einleitung der Stellkraft auf das Schaltglied mit dem Schaltglied oder mit einem mit dem Schaltglied zusammenwirkenden Zwischenelement, etwa einem die Stellkraft auf das Schaltglied weiterleitenden Stellhebel, formschlüssig in Anlage kommen. Hierzu greift das Schaltglied oder das Zwischenelement lose zwischen die am Stellglied vorgesehenen Stellkanten ein oder übergreift diese beidseitig. Der Stellanschlag kann von wenigstens einer am Stellglied vorgesehenen Erhebung, bevorzugt von zwei sich gegenüberliegenden Erhebungen, oder von den sich gegenüberliegenden Kanten einer in das Stellglied eingebrachten Vertiefung oder Ausnehmung gebildet sein. Die Erhebung(en) oder die Kanten der Vertiefung oder Ausnehmung bilden dann die Stellkanten.

Das Stellglied kann eine Mehrzahl von Stellanschlägen aufweisen. Bevorzugt weist das Stellglied eine der Anzahl der Schaltglieder entsprechende Anzahl von Stellanschlägen auf. Ist eine Mehrzahl von Schaltgliedern vorgesehen, kann insbesondere vorgesehen sein, dass das Stellglied die Mehrzahl der Schaltglieder über die jeweiligen Stellanschläge synchron bewegt.

In den Zeichnungen zeigen
- Figur 1a: eine Prinzipskizze einer als Überholfreilauf ausgebildeten und in Lastdrehrichtung beaufschlagten Freilaufkupplung, bei der das momenteinleitende Kupplungsglied das innere Kupplungsglied und das momentaufnehmende Kupplungsglied das äußere Kupplungsglied ist,
- Figur 1b: die Freilaufkupplung aus Figur 1a in Freilaufdrehrichtung beaufschlagt,
- Figur 2a: eine Prinzipskizze einer als Überholfreilauf ausgebildeten und in Lastdrehrichtung beaufschlagten Freilaufkupplung, bei der das momenteinleitende Kupplungsglied das äußere Kupplungsglied und das momentaufnehmende Kupplungsglied das innere Kupplungsglied ist,
- Figur 2b: die Freilaufkupplung aus Figur 3a in Freilaufdrehrichtung beaufschlagt,
- Figur 3a: eine Prinzipskizze einer alternativen Ausgestaltung einer als Überholfreilauf ausgebildeten und in Lastdrehrichtung beaufschlagten Freilaufkupplung, bei der das momenteinleitende Kupplungsglied das äußere Kupplungsglied und das momentaufnehmende Kupplungsglied das innere Kupplungsglied ist,
- Figur 3b: die Freilaufkupplung aus Figur 3a in Freilaufdrehrichtung beaufschlagt,
- Figur 4a: eine als Rücklaufsperre eingesetzte sperrbare Freilaufkupplung mit einem Kupplungsgehäuse, das als momentaufnehmendes Kupplungsglied fungiert, und mit einem in Lastübertragungsstellung befindlichen Zwischenglied,
- Figur 4b: die Freilaufkupplung aus Figur 4a mit dem in freilaufgewährender Stellung befindlichen Zwischenglied,
- Figur 5a: die Freilaufkupplung gemäß Figur 4a und Figur 4b unter Weglassung des Kupplungsgehäuses in der in Figur 4a gezeigten Stellung,
- Figur 5b: die Freilaufkupplung Figur 4a und Figur 4b unter Weglassung des Kupplungsgehäuses in der in Figur 4b gezeigten Stellung,
- Figur 6a: die Freilaufkupplung gemäß Figur 4a und Figur 4b unter Weglassung des Kupplungsgehäuses und des Zwischenglieds in der in Figur 4a und Figur 5a gezeigten Stellung,
- Figur 6b: die Freilaufkupplung gemäß Figur 4a und Figur 4b unter Weglassung des Kupplungsgehäuses und des Zwischenglieds in der in Figur 4b und Figur 5b gezeigten Stellung,
- Figur 7a: ein bei den Freilaufkupplungen gemäß einer der vorherigen Figuren 4a bis 6b eingesetztes Steuerglied in Form eines Reibrings,
- Figur 7b: das Steuerglied aus Figur 7a in einer Explosionsdarstellung,
- Figur 8a: eine alternative Ausgestaltung eines als Reibring ausgebildeten Steuerglieds in einer perspektivischen Ansicht, und
- Figur 8b: den in Figur 8a gezeigten Reibring in einer Seitenansicht.

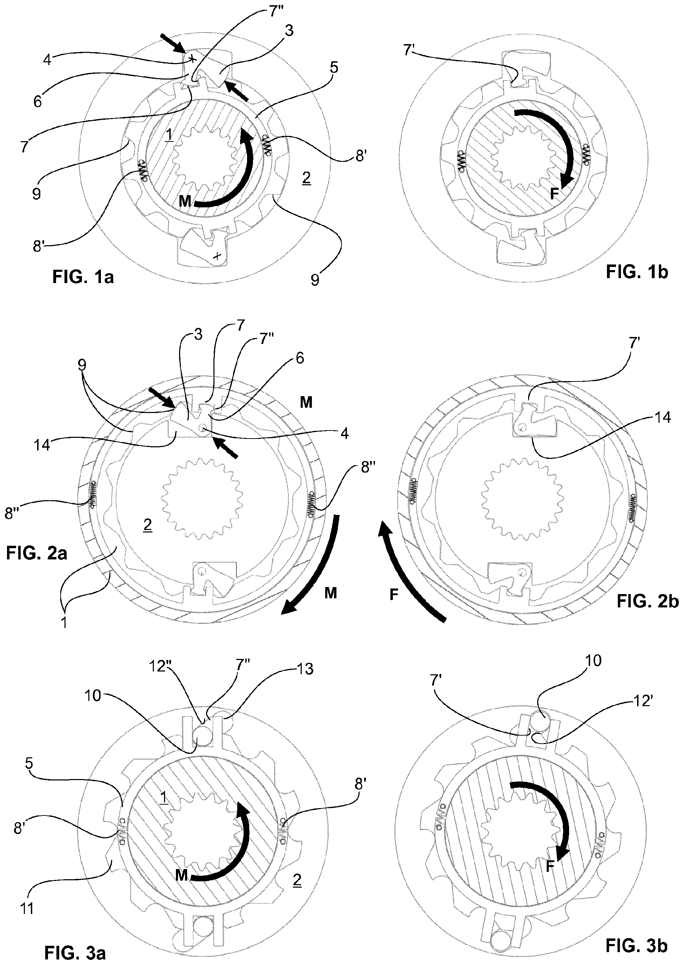

Figuren 1a/1b, 2a/2b, 3a/3b und 4a bis 6b zeigen teils in stark vereinfachter Darstellung einige beispielhafte Ausführungsformen einer Freilaufkupplung jeweils in Lastdrehrichtung (Figuren "a") und in Freilaufdrehrichtung (Figuren "b") beaufschlagt.

Die in Figur 1a gezeigte Ausführungsform einer als Überholkupplung ausgeführten Freilaufkupplung weist als momenteinleitendes Kupplungsglied 1 ein inneres Kupplungsglied auf, über das ein Antriebsmoment in die Freilaufkupplung eingeleitet wird. An einem momentaufnehmendem Kupplungsglied 2, das in dem in Figuren 1a und 1b gezeigten Ausführungsbeispiel das äußere Kupplungsglied ist, ist ein Schaltglied in Form einer Sperrklinke 3 über einen Schwenklagerbolzen positionsgelagert. Über diese Positionslagerung wird die Position der Sperrklinke innerhalb der Kupplung und in Relation zu den Kupplungsgliedern in einer für die Funktion der Kupplung erforderlichen Position gehalten, wobei die Sperrklinke 3 um eine Schwenkachse 4 herum schwenkbar ist.

Auf dem inneren, momenteinleitenden Kupplungsglied 1 befindet sich ein als Reibring 5 ausgeführtes Stellglied, in das die Sperrklinke 3 über einen Stellhebel 6 lose eingreift, indem es in axialer Richtung zwischen zwei Stellkanten 7'/7", die einen Stellanschlag 7 bilden, frei zwischen die beiden Stellkanten 7'/7" hineinragt.

Der hier beispielhaft zweiteilig ausgeführte Reibring 5 umgreift eine nach außen gerichtete Radialfläche des momenteinleitenden inneren Kupplungsgliedes 1 und ist über Vorspannelemente, die von kleinen Zugfedern 8' gebildet sind, mit seiner der Radialfläche des Kupplungsglieds 1 zugewandten Innenfläche gegen die Radialfläche des Kupplungsgliedes 1 geringfügig angestellt, so dass die beschriebene Radialflächenpaarung eine Reibpaarung ausbildet.

In der in Figur 1a gezeigten Eingriffsstellung steht die Sperrklinke 3 mit Anschlägen 9, die außenseitig an dem momenteinleitenden Kupplungsglied vorgesehen sind, formschlüssig in Anlage.

Wird nun das innere, momenteinleitende Kupplungsglied 1 in die in Figur 1a durch den eingezeichneten Pfeil angedeutete Lastdrehrichtung M angetrieben, wird das Drehmoment über einen Anschlag 9 und die Sperrklinke 3 auf das momentaufnehmende Kupplungsglied 2 weitergeleitet. Das momentaufnehmende Kupplungsglied 2 ist angetrieben und dreht sich mit derselben Geschwindigkeit wie das momenteinleitenden Kupplungsglied 1.

Wechselt das momenteinleitende innere Kupplungsglied 1 die Drehrichtung oder überholt das momentaufnehmende äußere Kupplungsglied 2 das innere Kupplungsglied 1 in der in Figur 1a eingezeichneten Drehrichtung, kommt es zu einer Änderung der Drehwinkelstellung zwischen den Kupplungsgliedern. Innerhalb des Stellanschlags 7 findet ein Anlagewechsel statt. Der Stellhebel 6 kommt mit der in Figur 1b links eingezeichneten Stellkante 7' am Reibring 5 in Anlage und erfährt hierüber eine Stellkraft, durch die ein Stellmoment auf die Sperrklinke 3 wirkt, das die Sperrklinke 3 aus der in Figur 1a ersichtlichen Eingriffsstellung in die in Figur 1b ersichtliche Freilaufstellung drängt. Die zwischen Reibring 5 und der Radialfläche am inneren Kupplungsglied induzierte Reibkraft drängt den Reibring 5 hierbei mit der linken Stellkante 7' dauerhaft gegen den Stellhebel 6, so dass die Sperrklinke 3 dauerhaft (solange der entsprechende Betriebszustand anhält) in der in Figur 1b gezeigten Freilaufstellung gehalten wird.

Bei einem erneuten Relativdrehrichtungswechsel zwischen den beiden Kupplungsgliedern kehrt sich der Vorgang um (Wechsel von dem in Figur 1b gezeigten freilaufgewährenden Zustand zurück in den in Figur 1a gezeigten lastübertragenden Zustand). Erneut findet innerhalb des Stellanschlags 7 ein Anlagewechsel statt und der Stellhebel 6 gerät nun bedingt dadurch, dass der Reibring 5 infolge des Drehrichtungswechsels des inneren Kupplungsgliedes von dem inneren Kupplungsglied reibkraftinduziert in die andere Richtung geschleppt wird, mit der anderen Stellkante 7" in Anlage (die in den Figuren rechte Stellkante des doppelseitig wirkenden Stellanschlags 7), wodurch die Sperrklinke 3 wieder aus der in Figur 1b gezeigten Freilaufstellung in die in Figur 1a gezeigte Eingriffsstellung gedrängt wird und der aus Figur 1a ersichtliche lastübertragende Zustand wieder hergestellt wird.

Bei der in Figur 2a gezeigten Ausführungsform einer als Überholkupplung ausgeführten Freilaufkupplung ist das äußere Kupplungsglied das momenteinleitende Kupplungsglied 1 und das innere Kupplungsglied das momentaufnehmende Kupplungsglied 2. Das auch hier in Form einer Sperrklinke 3 vorhandene Schaltglied ist am momentaufnehmendem inneren Kupplungsglied positionsgelagert und um eine Schwenkachse 4 herum schwenkbar.

Das als Reibring 5 ausgeführte Stellglied befindet sich innerhalb des momenteinleitenden Kupplungsglieds 1 und bildet mit zwei Stellkanten 7'/7" einen Stellanschlag 7 aus, in den die Sperrklinke 3 über den Stellhebel 6 lose eingreift.

Durch als Vorspannelemente fungierende Druckfedern 8" wird der Reibring 5 mit seiner nach außen gerichteten Radialfläche innenseitig des momenteinleitenden Kupplungsgliedes 1 gegen eine nach innen weisende Radialfläche am Kupplungsglied 1 angestellt, so dass die beschriebene Radialflächenpaarung eine Reibpaarung ausbildet.

In der in Figur 2a gezeigten Eingriffsstellung steht die Sperrklinke 3 mit Anschlägen 9, die innenseitig an dem momenteinleitenden Kupplungsglied 1 vorgesehen sind, formschlüssig in Anlage. Wird das äußere Kupplungsglied 1 in die in Figur 2a durch den eingezeichneten Pfeil angedeutete Lastdrehrichtung M angetrieben, wird das Drehmoment über einen Anschlag 9 und die Sperrklinke 3 auf das momentaufnehmende innere Kupplungsglied 2, an dem die Sperrklinke 3 positionsgelagert und drehmomentübertragend abgestützt ist, weitergeleitet. Das momentaufnehmende, innere Kupplungsglied 2 ist angetrieben und dreht sich mit derselben Geschwindigkeit wie das momenteinleitende Kupplungsglied 1 in die in Figur 2a durch die Richtungspfeile angedeutete Drehrichtung.

Dreht sich infolge eines Drehrichtungswechsels das momenteinleitende äußere Kupplungsglied 1 in die in Figur 2b gezeigte Freilaufdrehrichtung oder überholt das momentaufnehmende innere Kupplungsglied 2 das äußere Kupplungsglied 1 in der in Figur 2a eingezeichneten Drehrichtung, so kommt es zwischen den Kupplungsgliedern zu einer Änderung der Drehwinkelstellung. Innerhalb des Stellanschlags 7 findet ein Anlagewechsel statt. Der Stellhebel 6 kommt mit der in Figur 2b rechts eingezeichneten Stellkante 7' in Anlage und erfährt eine Stellkraft, durch die ein Stellmoment auf die Sperrklinke 3 wirkt, das die Sperrklinke 3 aus der in Figur 2a ersichtlichen Eingriffsstellung in die in Figur 2b ersichtliche Freilaufstellung drängt. Die zwischen Reibring 5 und der nach innen weisenden Radialfläche am äußeren Kupplungsglied 1 induzierte Reibkraft drängt den Reibring 5 mit der rechten Stellkante 7' dauerhaft gegen den Stellhebel 6, so dass die Sperrklinke 3 dauerhaft in die in Figur 2b gezeigte Freilaufstellung gedrängt und solange in dieser Stellung gehalten wird, wie der Belastungszustand anhält.

Bei einem erneuten Wechsel der Relativdrehrichtung zwischen den beiden Kupplungsgliedern kehrt sich der Vorgang um (Wechsel von dem in Figur 2b gezeigten freilaufgewährenden Zustand zurück in den in Figur 2a gezeigten lastübertragenden Zustand). Erneut findet innerhalb des Stelleanschlags 7 ein Anlagewechsel statt und der Stellhebel 6 gerät nun bedingt dadurch, dass der Reibring 5 infolge des Drehrichtungswechsels des äußeren Kupplungsgliedes von dem äußeren Kupplungsglied in die andere Richtung geschleppt wird, mit der anderen in Figur 2a links eingezeichneten Stellkante 7" in Anlage, wodurch die Sperrklinke 3 aus der in Figur 2b gezeigten Freilaufstellung in die in Figur 2a gezeigte Eingriffsstellung gedrängt wird und der aus Figur 2a ersichtliche Zustand wieder hergestellt wird.

Zu Figuren 1a bis 2b sei angemerkt, dass die vorstehend als Überholkupplungen beschriebenen Freilaufkupplungen dann, wenn das momentaufnehmende Kupplungsglied 2 ein sich nicht mitdrehendes, ortsfestes Kupplungsglied ist, das insbesondere auch von einem Gehäuse einer Antriebsstrangbaugruppe eines Kraftfahrzeugs gebildet oder an einem solchen Gehäuse ortsfest angeordnet sein kann, die Kupplung als Sperrkupplung fungieren würde. Bei Beaufschlagen der Kupplung in Lastdrehrichtung M wäre die Drehung des momenteinleitenden Kupplungsgliedes 1 über das Sperrglied 3 blockiert. In der in Figur 1b oder Figur 2b gezeigten Freilaufdrehrichtung könnte das momenteinleitende Kupplungsglied 1 hingegen frei drehen.

Figur 3a zeigt eine Prinzipskizze einer alternativen Ausgestaltung einer Freilaufkupplung, die als Rollenfreilauf bezeichnet werden kann und nachfolgend beispielhaft als Rücklaufsperre beschrieben wird, selbstverständlich aber auch als Überholfreilauf eingesetzt werden kann. Auch hier ist in Figur 3a die Lastdrehrichtung M gezeigt, während in Figur 3b die Freilaufdrehrichtung F gezeigt ist. Analog zu der in Figur 1a und Figur 1b gezeigten Ausführungsform ist das momenteinleitende Kupplungsglied 1 das innere Kupplungsglied und das momentaufnehmende Kupplungsglied 2 das äußere Kupplungsglied.

Bei der Freilaufkupplung gemäß Figur 3a und Figur 3b liegt ein in Form eines Sperrbolzens 10 ausgeführtes Schaltglied verschieblich innerhalb einer sich schräg radial erstreckenden und als Führung für den Sperrbolzen 10 dienende Sperrbolzenaufnahme 13, die in dem in den Figuren gezeigten schematischen Ausführungsbeispiel im äußeren Kupplungsglied 2 vorgesehen ist. Der Sperrbolzen 10 liegt außerdem lose zwischen zwei radialen Erhebungen, die sich von einem als Stellglied fungierenden Reibring 5 radial nach außen erstrecken und die Stellkanten 7'/7" eines Stellanschlags 7 bilden.

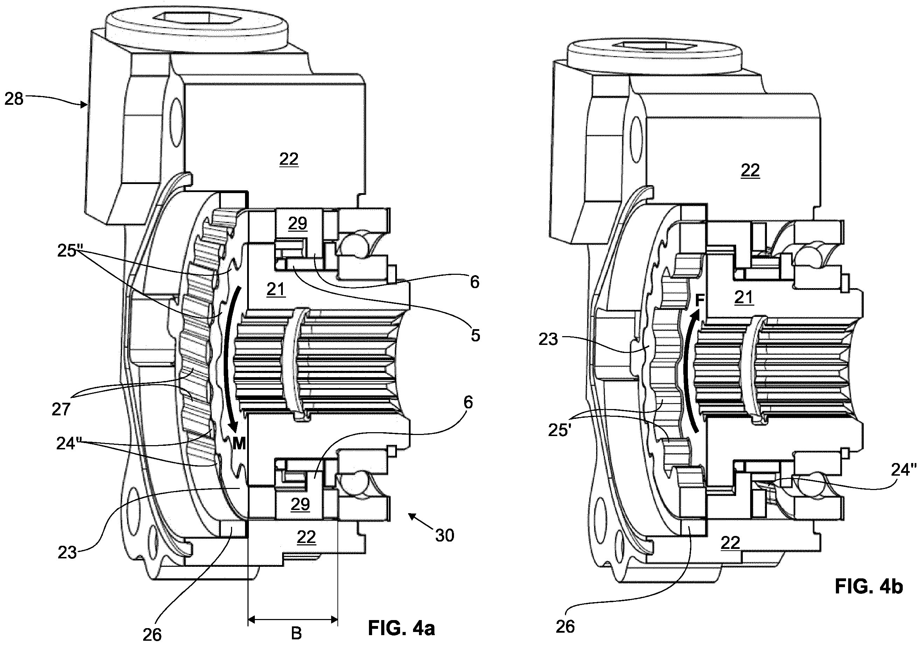

Bei einem Zustandswechsel von einer in Freilaufdrehrichtung F beaufschlagten Kupplung zu einer in Lastdrehrichtung M beaufschlagten Kupplung wird der Sperrbolzen 10 durch die vom inneren Kupplungsglied 1 auf das als Reibring 5 ausgebildete Stellglied ausgeübte Reibkraft mitgeschleppt und innerhalb der Sperrbolzenaufnahme 13 translatorisch bewegt, wobei sich das mit dem Stellglied 5 in Reibkontakt stehende Kupplungsglied, im Ausführungsbeispiel also das momenteinleitende Kupplungsglied 1. Hierdurch stellt die Stellkante 7" den Sperrbolzen 10 gegen die in dieser Lastrichtung den Sperrbolzen 10 schräg nach innen führende Führungsfläche 12" an und drängt diesen daher radial nach innen, so dass eine außenseitig auf dem inneren Kupplungsglied 1 vorgesehene Verzahnung 11 über den Sperrbolzen 10 in Eingriff mit dem momentaufnehmenden äußeren Kupplungsglied 2 gerät. Das äußere, momentaufnehmende Kupplungsglied 2 blockiert die Drehung des inneren, momenteinleitenden Kupplungsglieds (Schaltzustand gemäß Figur 3a, Eingriffsstellung). Beim Übergang von der Freilaufstellung in die Eingriffsstellung dreht sich das Kupplungsglied, dass mit dem Stellglied 5 in Reibkontakt steht, bevorzugt das momenteinleitende Kupplungsglied, um etwa 10°, bevor die den Eingriff gewährleistende lastübertragende Kontakte mittels des Sperrglieds wirksam werden. Dies kann so selbstverständlich auch für die in Figur 1a bis 2b sowie für die in Figur 4a bis 6b gezeigte Ausführungsform einer Freilaufkupplung gelten.

Die Sperrglieder selber sind zumindest in dem Abschnitt, in dem sie bei in Lastdrehrichtung beaufschlagter Kupplung lastabstützend mit dem ersten oder zweiten Kupplungsglied in Anlage kommen, rotationssymmetrisch ausgebildet. Bevorzugt sind die Sperrglieder von einem insgesamt rotationssymmetrischen Körper gebildet, insbesondere von einem Zylinder.

Bei einem Wechsel der Drehrichtung von der Lastdrehrichtung M in die Freilaufdrehrichtung F (Figur 3b) drängt der Reibring 5, getrieben durch die mit dem inneren Kupplungsglied 1 bestehende Reibpaarung, den Sperrbolzen 10 mittels der Stellkante 7' gegen die in dieser Lastrichtung den Sperrbolzen 10 schräg nach außen führende Führungsfläche 12' radial nach außen in eine Freilaufstellung. Gleichzeitig sind auch die Verzahnungsflächen der Verzahnung 11, die in Freilaufdrehrichtung F gegen den Sperrbolzen 10 in Anlage geraten, so ausgebildet, dass sie ein Nach-Außen-Drängen des Sperrbolzens 10 in die Freilaufstellung unterstützen. Ersichtlich steht der Sperrbolzen 10 in Figur 3b einer freien Drehung des inneren Kupplungsglieds gegenüber dem äußeren Kupplungsglied in Freilaufdrehrichtung F nicht mehr im Wege. Durch die zwischen dem inneren Kupplungsglied 1 und dem Reibring 5 induzierte Reibkraft drängt die Stellkante 7' den Sperrbolzen dauerhaft in die in Figur 3b gezeigte Stellung.

Aus den Figuren 3a und 3b ist ersichtlich, dass die Sperrbolzenaufnahme 13, die als Sperrbolzenführung fungiert und zur Führung des Sperrbolzens 10 aus der Eingriffsstellung in die Freilaufstellung (und umgekehrt) dient, bevorzugt in dem Kupplungsglied angeordnet ist, dass nicht mit dem Stellglied in Reibkontakt steht.

Selbstverständlich kann die in den Figuren 3a und 3b gezeigte Freilaufkupplung bei nicht drehfester Abstützung des momentaufnehmenden Kupplungsglieds als Überholkupplung eingesetzt werden. Auch kann das momenteinleitende Kupplungsglied bei entsprechend naheliegenden Modifikationen das äußere Kupplungsglied und das momentaufnehmende Kupplungsglied das innere Kupplungsglied sein.

Die nachfolgenden Figuren 4a bis Figur 8b zeigen eine als Sperrkupplung einsetzbare Freilaufkupplung 20 oder Untergruppen oder Teile hiervon. Die Freilaufkupplung kann zum Beispiel fest an einer Achsantriebseinheit eines Kraftfahrzeugs gehäusefest angeordnet werden und als selbstschaltende Rücklaufsperre eingesetzt werden. Dabei fungiert das Gehäuse als ein momentaufnehmendes Kupplungsglied 22, das - je nachdem, ob sich ein Zwischenglied 23 in einer freilaufgewährenden oder einer lastübertragenden Stellung befindet - die Drehung eines momenteinleitenden Kupplungsgliedes 21 in einer Freilaufrichtung F zulässt oder in einer der Freilaufrichtung entgegengesetzten Lastdrehrichtung M blockiert. Das momentaufnehmende äußere Kupplungsglied 22 kann bei Ausgestaltung der Freilaufkupplung als Überholkupplung unter gleichzeitiger Beibehaltung der nachfolgend beschriebenen Funktionen auch ein drehbar gelagertes Kupplungsglied sein.

Die in Figur 4a dargestellte Stellung der Freilaufkupplung ist eine lastübertragende Stellung. Zwischen dem äußeren momentaufnehmenden Kupplungsglied 22 und einem inneren, momenteinleitenden Kupplungsglied 21 ist ein axial verschiebbares Zwischenglied 23 angeordnet. Das Zwischenglied 23 ist als außen- und innenverzahnter Ring ausgebildet und in einem Ringraum zwischen dem äußeren Kupplungsglied 22 und dem inneren Kupplungsglied 21 aufgenommen, der dadurch entsteht, dass das äußere Kupplungsglied 22 das innere Kupplungsglied 21 in axialer Richtung übergreift.

Das Zwischenglied 23 weist als äußere Lastverzahnung eine Schraubverzahnung 24' und als innenseitige Lastverzahnung eine Innenverzahnung 25' auf. Die au-ßenseitige Schraubverzahnung 24' steht mit einer auf der Innenseite des äußeren Kupplungsglieds 22 vorgesehenen und somit drehfesten inneren Schraubverzahnung 24" in Eingriff. Die äußere Schraubverzahnung 24' erstreckt sich über die gesamte axiale Breite des Zwischenglieds 23. Die am Zwischenglied nach innen gerichtete Verzahnung 25' steht mit einer am inneren Kupplungsglied 21 angeordneten Außenverzahnung 25" in Eingriff. Die Innenverzahnung 25' am Zwischenglied 23 bzw. die Außenverzahnung 25" am inneren momenteinleitenden Kupplungsglied 21 erstrecken sich in axialer Richtung gesehen nur über einen kurzen axialen Teilbereich des Zwischenglieds 23 bzw. des inneren Kupplungsgliedes 21 und befinden sich auch nur in der lastübertragenden Stellung (Figuren 4a, 5a, 6a) in lastübertragendem Eingriff miteinander.

Die Verzahnungspaarungen 24'/24" und 25'/25" bilden die Lastverzahnungspaarungen, über die beim bestimmungsgemäßen Einsatz der Freilaufkupplung Drehmoment unter Zwischenschaltung des Zwischengliedes zwischen den Kupplungsgliedern 21, 22 übertragen wird. Diese Lastverzahnungspaarungen verteilen sich in der Lastübertragungsstellung axial über eine Verzahnungsbreite B, die aus Figur 4a ersichtlich ist. Die Verzahnungsbreite B definiert sich über den maximalen axialen Abstand von senkrecht zur Rotationsachse stehenden äußeren Verzahnungsebenen, in denen innenseitig und/oder außenseitig des Zwischenglieds wirksame Lastverzahnungspaarungen gerade noch wirksam sind.

Da sich bei dem in den Figuren gezeigten Ausführungsbeispiel die am Zwischenglied angeordnete und mit dem Kupplungsglied 22 in Eingriff stehende Lastverzahnung 24' sich über die gesamt Breite des Zwischenglieds 23 erstreckt und die mit dem Kupplungsglied 21 in Eingriff stehende Lastverzahnung 25' sich axial nicht über die Lastverzahnung 24' hinaus erstreckt, entspricht die Verzahnungsbreite B bei diesem Ausführungsbeispiel gleichzeitig der axialen Breite des Zwischenglieds 23.

Das Zwischenglied 23 ist axial verschieblich zwischen dem inneren Kupplungsglied 21 und dem äußeren Kupplungsglied 22 angeordnet, und kann unter Einwirkung der Schraubverzahnungspaarung 24'/24" aus der in Figur 4a gezeigten Lastübertragungsstellung axial in die in Figur 4b gezeigte freilaufgewährende Stellung verschoben werden. Während in Figur 4a das Zwischenglied 23 und das innere Kupplungsglied 21 über die Verzahnungspaarung 25'/25" zur Lastübertragung in Eingriff stehen und das Zwischenglied 23 mit seiner nach rechts weisenden axialen Außenfläche gegen das Wälzlager 30 axial abgestützt ist, ist das Zwischenglied 23 in der in Figur 4b gezeigten Stellung nach links verschoben und befindet sich außer Eingriff mit dem inneren Kupplungsglied 21.

Hierzu wurde zunächst ein als Sperrteil fungierender Sperrring 26 aus der in Figur 4a gezeigten Blockierstellung, in die in Figur 4b gezeigte Freigabestellung relativ zum Kupplungsglied 22 verdreht. In der in Figur 4a gezeigten Blockierstellung blockiert eine Verzahnung am Sperrring 26, die der innenseitig am äußeren Kupplungsglied 22 vorgesehenen Schraubverzahnung 24" entspricht, als Sperrverzahnung 27 zunächst noch ein axiales Verschieben des Zwischengliedes 23 nach links. Durch ein Verdrehen des Sperrrings 26 relativ zum äußeren Kupplungsglied mittels einer dem Sperrring 26 zugeordneten Sperrteil-Aktuatorik 28 wird der Sperrring in die in Figur 4b gezeigte Freigabestellung verdreht, in der die Sperrverzahnung 27 mit der innenseitig am äußeren Kupplungsglied 22 vorgesehenen Schraubverzahnung 24" in Überdeckung gerät, so dass das Zwischenglied 23 in die Sperrverzahnung 27 einfahren kann. Sodann geraten Zwischenglied 23 und inneres Kupplungsglied 21 außer Eingriff und das innere Kupplungsglied 21 kann infolge der Entkopplung vom Zwischenglied 23 und innerem Kupplungsglied 21 frei in der in Figur 4b angedeuteten Freilaufdrehrichtung F rotieren.

Das Vorsehen eines Sperrteil ist für die Funktion der Kupplung als bloße Freilaufkupplung, die ein freies Drehen in eine Freilaufrichtung und eine Lastübertragung bei einer der Freilaufrichtung entgegengesetzten Drehbeanspruchung zulässt, nicht erforderlich. Es bietet aber die Möglichkeit, den Übergang in die freilaufgewährende Stellung zu blockieren und somit bei in Blockierstellung befindlichem Sperrteil auch eine Lastübertragung in Freilaufdrehrichtung zu ermöglichen.

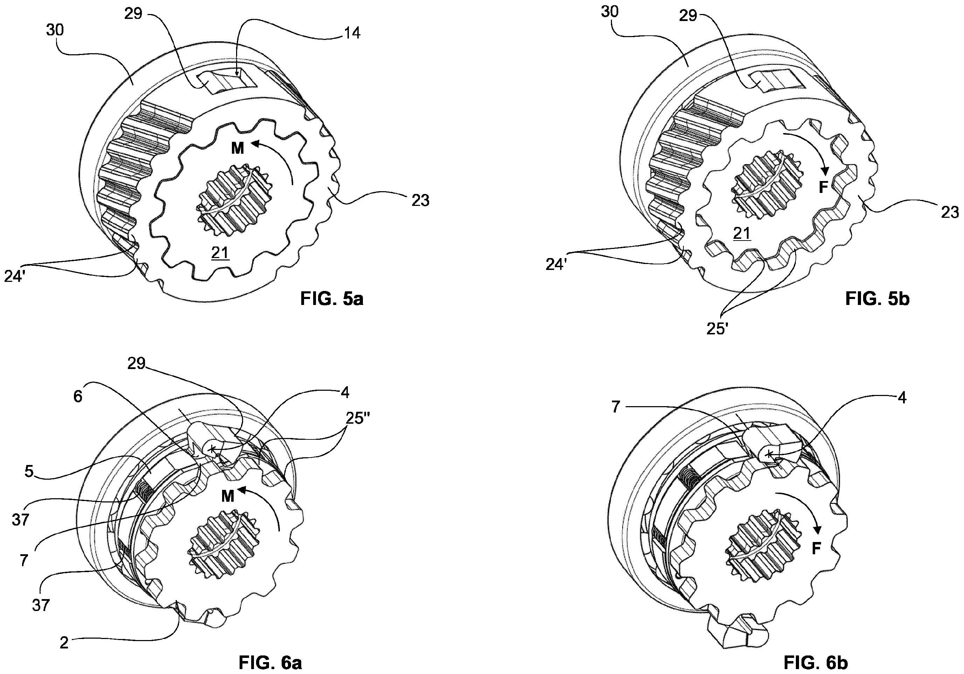

In den Figuren 4a bis 6b ist ersichtlich, dass zwei als Steuerklinken bzw. Steuerglieder 29 ausgebildete Schaltglieder, die auch als Synchronisationsglieder fungieren, am Zwischenglied 23 innerhalb der Verzahnungsbreite B und radial innenseitig des Übergriffs, mit dem das äußere Kupplungsglied 22 das innere Kupplungsglied 21 unter Bildung eines Ringraums überlappend übergreift, angeordnet sind. Die Steuerglieder 29 sind in zwei sich diametral gegenüberliegenden taschenartigen Durchbrüchen in dem Zwischenglied 23 positionsgelagert (in Figur 5a und Figur 5b anschaulich dargestellt), wobei sie im Zwischenglied 23 frei schwenkbar aufgenommen sind und sich radial außenseitig gegen das angrenzende Kupplungsglied 22 und in Umfangsrichtung gegen das Zwischenglied 23 abstützen. Ein zusätzliches mit den Steuergliedern zusammenwirkendes Lagerungselement, etwa Schwenklagerbolzen, ist nicht vorgesehen. Anstelle einer derartigen Positionslagerung der Steuerglieder in dem Zwischenglied, die gewährleistet, dass die Steuerglieder eine sehr hohe Last abstützen können, ist es auch möglich, dass die Steuerglieder 9 mittels Schwenklagerbolzen, die seitlich der Steuerklinken am Zwischenglied abgestützt sind und in die Steuerglieder eingreifen, schwenkbar gelagert sind.

Die in den Figuren 4a bis 8b gezeigte Anzahl von zwei Schaltgliedern und deren diametral gegenüberliegende und damit den Zwischenring in vorteilhafter Weise in Umfangsrichtung symmetrisch belastende Anordnung hat sich als vorteilhafte Ausgestaltung erwiesen. Es kann aber auch eine hiervon verschiedene Anzahl von Schaltglieder vorgesehen sein (eine oder mehr als zwei) und eine andere Anordnung gewählt werden. Gleiches gilt selbstverständlich auch für die in den Figuren 1a/1b, 2a/2b und 3a/3b gezeigten Ausführungsformen, bei denen ebenfalls bevorzugt mindestens zwei Schaltglieder vorgesehen sind, die weiter bevorzugt aus gründen einer gleichmäßigen Lastverteilung und zur Vermeidung von Unwuchten gleichmäßig über den Umfang verteilt sind.

Aus Figur 6a und Figur 6b ist durch zeichnerisches Weglassen des Zwischenglieds ersichtlich, dass die als Steuerklinken ausgeführten Steuerglieder 29 über einen axial zu den Steuergliedern 29 versetztes und als Stellhebel 6 ausgebildetes Zwischenelement mit einem als Reibring 5 ausgebildeten Stellglied in Eingriff stehen. Der Reibring 5 steht mit dem inneren Kupplungsglied 21 sowie mit dem Innenring des Lagers 30 in Reibkontakt, wird bei einer Relativ-Drehung von innerem Kupplungsglied 21 und Zwischenring 23 aber dadurch, dass der Stellhebel 6 einerseits mit dem Zwischenglied 23 und andererseits mit dem Reibring 5 formschlüssig zusammenwirkt, daran gehindert, sich mit dem inneren Kupplungsglied 21 und dem sich hiermit mitdrehenden Innenring des Lagers 30 mitzudrehen. Vielmehr wird der Reibring 5 mit den daran ausgebildeten Stellkanten 7'/7", die durch Ausnehmungen 33 im Reibring 5 gebildet sind, gegen die Stellhebel 6 gedrängt, die hierdurch eine in Umfangsrichtung des Reibrings 5 wirkende reibungsinduziere Stellkraft erfahren, durch die wiederum ein Stellmoment auf die Steuerglieder 29 ausgeübt wird. Je nach Richtung der Änderung der Drehwinkelstellung zwischen innerem Kupplungsglied 21 und Zwischenglied 23 werden die Steuerglieder 29 somit entweder in eine Freilaufstellung gedrängt, in der die freien Enden der Steuerglieder 29 in radialer Richtung von dem inneren Kupplungsglied 21 weggeschwenkt sind und sich außerhalb der Reichweite der am inneren Kupplungsglied 21 vorgesehenen Außenverzahnung 25" befinden (Figuren 5b und 6b). Oder die Steuerglieder 9 werden bei einem Wechsel der in den Figuren 5b und 6b gezeigten Freilaufdrehrichtung F in die Lastdrehrichtung M in eine Eingriffsstellung gedrängt, in der die freien Enden der Steuerglieder 29 radial nach innen in Richtung des inneren Kupplungsglieds 21 geschwenkt sind und hierdurch in Anlage mit der Außenverzahnung 25" geraten. Bei einer Relativ-Drehung des inneren Kupplungsgliedes 21 gegenüber dem Zwischenring 23 in Freilaufdrehrichtung F (Figur 5b, Figur 6b) werden die Steuerklinken 29 somit dauerhaft nach außen außer Eingriff mit der am inneren Kupplungsglied 21 vorgesehenen Verzahnung 25" in die Freilaufstellung gedrängt.

Der am Reibring 5 ausgebildete Stellanschlag 7 mit seinen in Umfangsrichtung wirkenden Stellkanten 7'/7", der in dem gezeigten Ausführungsbeispiel durch eine sich in axialer Richtung erstreckende Vertiefung im Reibring 5 gebildet ist, hat eine wirksame Breite, die eine axiale Verschiebung der lose in den Stellanschlag 7 eingreifenden Stellhebel 6 zulassen, die sich in axialer Richtung mit dem Zwischenglied 23 und den Steuergliedern 29 mitbewegen. Diese axiale Verschiebbarkeit der zwischen Stellglied (Reibring 5) und Schaltglied (Steuerklinken 29) wirkenden Zwischenelemente (Stellhebel 6) innerhalb des Stellanschlags 7 lässt sich insbesondere einem Vergleich von Figuren 6a und 6b anschaulich entnehmen.

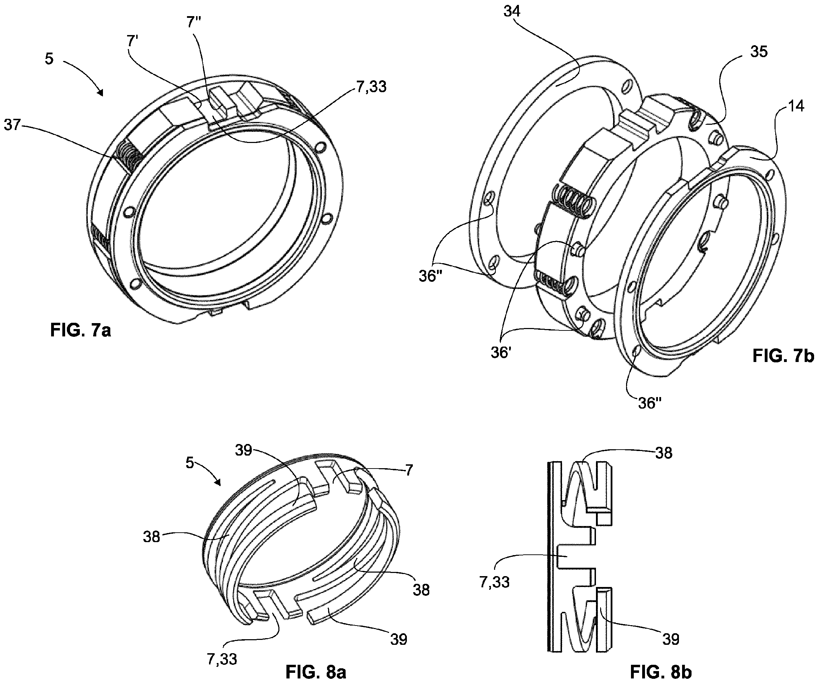

Das als Reibring 5 ausgebildete Stellglied ist zu Veranschaulichungszwecken im Detail in Figur 7a und Figur 7b gezeigt.

Der Reibring 5 weist eine der Anzahl der Steuerklinken oder Stellhebel entsprechende Anzahl und deren Positionierung am Zwischenglied entsprechend positionierte Stellanschläge 7 auf, in die Schaltglieder oder mit den Schaltgliedern zusammenwirkende Zwischenelemente (Stellhebel) eingreifen können. Die Stellanschläge bilden Stellkanten 7'/7" aus, die mit den Schaltgliedern oder Zwischenelementen in Anlage kommen, um die vom Reibring 5 ausgeübten Stellkräfte auf das Schaltglied formschlüssig übertragen zu können. Selbstverständlich können auch andersartige Stellkanten, Vorsprünge oder sonstige Mittel, die ein formschlüssiges In-Anlage-Kommen des Stellgliedes gegen die Schaltglieder oder Zwischenelemente ermöglichen, vorgesehen werden.

Am mehrteilig ausgebildeten Reibring 5 sind in axialer Richtung wirkende und sich über zumindest einen Teilabschnitt des Umfangs, bevorzugt über den gesamten Umfang des Reibrings 5 erstreckende Reibglieder 34 vorgesehen, die einem Trägerring 35 zugeordnet sind. Reibglieder 34 und Trägerring 35 greifen dabei über miteinander korrespondierende Arretierungsmittel 36' und 36" derart ineinander, dass die Reibglieder zumindest in geringem Maße gegenüber dem Trägerring 35 axial verschieblich, gleichwohl aber gegenüber dem Trägerring 35 verdrehsicher gehalten sind. Im Trägerring 35 sind Aufnahmen für Vorspannelemente 37, bevorzugt in Form der in den Figuren gezeigten Spiralfedern, vorgesehen, über die die Reibglieder 34 in axialer Richtung vom Trägerring 35 weggedrängt werden.

Wird der Reibring 5 bei Einfügen in einen durch zwei Begrenzungsflächen seitlich begrenzten Ringspalt in axialer Richtung gestaucht, üben die Vorspannelemente 37 eine Stellkraft aus, durch die die Reibglieder 34 mit ihren seitlichen Außenflächen gegen die den Ringspalt seitlich begrenzenden Begrenzungsflächen angestellt werden. So werden beidseitig des Reibrings 5 Axialreibflächenpaarungen gebildet, deren Reibkraft durch die Vorspannelemente gezielt beeinflussbar ist.

Eine alternative Ausgestaltung eines Reibrings 5 zeigen Figur 8a und Figur 8b. Am Reibring 5 sind in axialer Richtung wirkende und sich über zumindest einen Teilabschnitt des Umfangs erstreckende Biegestege 38 vorgesehen, die die Vorspannelemente bilden und als Biegefedern wirksam sind und eine in axiale Richtung wirkende und die Reibung beeinflussende Vorspannkraft auf Seitenarme 39 ausüben, die sich über einen Teilabschnitt des Umfangs des Reibrings in Umfangsrichtung erstrecken. Wird der Reibring 5 bei Einfügen in einen durch zwei Begrenzungsflächen seitlich begrenzten Ringspalt in axialer Richtung gestaucht, üben die Biegestege als Vorspannelemente eine Vorspannkraft aus, durch die der Reibring 5 mit seinen seitlichen von den Seitenarmen 39 gebildeten axialen Au-βenflächen gegen die den Ringspalt seitlich begrenzenden Begrenzungsflächen unter Bildung einer Axialreibflächenpaarung angestellt wird. Auch diese Ausgestaltung weist einen Stellanschlag 7 aus, bei dem die Stellkanten 7'/7" durch die seitlichen Kanten von im Reibring 5 vorgesehenen Ausnehmungen 33 gebildet sind.

Bei den beiden vorstehend beschriebenen beispielhaften Ausgestaltungen eines Reibrings ist gewährleistet, dass der Reibring spielfrei in dem Ringspalt aufgenommen ist. Außerdem lässt sich das Reibmoment, dass der Reibring erfährt, wenn er bei rotierendem Ringspalt stationär in diesem gehalten wird, über die Ausgestaltung bzw. Dimensionierung der Vorspannelemente gut einstellen. In dem in den Figuren 4a bis 6b gezeigten Ausführungsbeispielen wird der Ringspalt zwischen dem Innenring des Lagers 30 und der diesem zugewandten seitlichen Flächen der am Kupplungsglied 21 vorgesehenen Lastverzahnung 25" gebildet.

Alle vorstehenden Ausführungsformen der Figuren 1a bis 6b haben die bevorzugte Ausgestaltung gemein, bei der die Schaltglieder, egal ob als Sperrglied bzw. Sperrklinke oder als Steuerglied bzw. Steuerklinke oder als Sperrbolzen ausgebildet, in dem Kupplungsglied verschwenkbar oder translatorisch verschiebbar aufgenommen und geführt sind, das nicht mit dem Stellglied in Reibkontakt steht.

Die Ausführungsformen der Figuren 1a bis 2b sowie 4a bis 6b können ferner alle derart ausgestaltet sein, dass die Schaltglieder in einer Schaltgliedaufnahme 14 eines Kupplungsgliedes, bevorzugt des lastaufnehmenden Kupplungsgliedes, oder des Zwischenglieds frei derart aufgenommen sind, dass sich die Schaltglieder im Lastfall lediglich über äußere Anlageflächen gegen das oder die angrenzenden Bauteile (gegen das Kupplungsglied selbst und/oder gegen das Zwischenglied) abstützen. Die (gedachte) Schwenkachse 4 wird dann durch die Anlagen definiert, die das jeweilige Schaltglied mit den angrenzenden Bauteilen bildet. Die Schaltgliedaufnahme ist bevorzugt von einer taschenartigen Vertiefung in einem Kupplungsglied, insbesondere dem momentaufnehmenden Kupplungsglied, oder einer taschenartigen Vertiefung oder einem Durchbruch in dem Zwischenglied gebildet.

Es sei darauf hingewiesen, dass die Anordnungen bzw. die Zuordnungen der einzelnen Funktionselemente der Freilaufkupplung, insbesondere die Anordnung bzw. Zuordnung der Schraubverzahnung, der Steuerklinke, des Stellglieds, der Stellkanten des Stellanschlags und des Sperrteils mit seinen Sperrelementen an dem einen oder dem anderen Kupplungsglied oder dem Zwischenglied, sowie die Fragen, ob das momenteinleitende oder das momentaufnehmende Kupplungsglied im Überlappungsbereich innen- oder außenliegend zu dem jeweils anderen Kupplungsglied angeordnet ist, und welche der Verzahnungstypen radial außenseitig oder radial innenseitig an den Funktionsteilen vorgesehen sind, für die Beibehaltung der Grundfunktion der beschriebenen Freilaufkupplung und für die im Sinne der Erfindung als vorteilhaft beschriebene konstruktiven Ausgestaltung nicht zwingend vorgegeben sind und nicht notwendigerweise so, wie in den Figuren beispielhaft gezeigt, vorgesehen sein müssen. Durch Änderung der Anordnung bzw. Zuordnung der einzelnen funktionalen Elemente gegenüber der in den Figuren gezeigten Ausgestaltung wird der Gegenstand der Erfindung nicht verlassen.

Es sei nochmals darauf hingewiesen, dass die Freilaufkupplung, so wie in den Figuren gezeigt, als Rücklaufsperre konzipiert sein kann. Die Freilaufkupplung kann aber auch als Überholkupplung konzipiert sein, bei der ein Kupplungsteil das andere einer Lastübertragungsrichtung M drehend antreibt und in einer Freilaufrichtung F zu überholen vermag.

### Bezugszeichenliste

- 1: momenteinleitendes Kupplungsglied
- 2: momentaufnehmendes Kupplungsglied
- 3: Schaltglied (Sperrklinke)
- 4: Schwenkachse
- 5: Stellglied (Reibring)
- 6: Zwischenelement (Stellhebel)
- 7: Stellanschlag
- 7'/7": Stellkante
- 8'/8": Vorspannelement (Zugfeder/Druckfeder)
- 9: Anschläge eines Anschlagkranzes
- 10: Schaltglied (Sperrbolzen)
- 11: Verzahnung
- 12'/12": Führungsflächen
- 13: Sperrbolzenaufnahme
- 14: Schaltgliedaufnahme
- 21: momenteinleitendes Kupplungsglied
- 22: momentaufnehmendes Kupplungsglied
- 23: Zwischenglied
- 24': äußere Schraubverzahnung am Zwischenglied
- 24": innere Schraubverzahnung am ersten Kupplungsglied
- 25': Innenverzahnung am Zwischenglied
- 25": Außenverzahnung am zweiten Kupplungsglied
- 26: Sperrteil (Sperrring)
- 27: Sperrteilverzahnung
- 28: Sperrteil-Aktuatorik
- 29: Schaltglied (Steuerglied)
- 30: Wälzlager
- 33: Ausnehmung
- 34: Reibglieder
- 35: Trägerring
- 36', 36": Arretierungsmittel
- 37: Vorspannelemente (Druckfedern)
- 38: Vorspannelement (Biegesteg)
- 39: Seitenarme
- M: Lastdrehrichtung
- F: Freilaufdrehrichtung

det, in dem Kupplungsglied verschwenkbar oder translatorisch verschiebbar aufgenommen und geführt sind, das nicht mit dem Stellglied in Reibkontakt steht.

Die Ausführungsformen der Figuren 1a bis 2b sowie 4a bis 6b können ferner alle derart ausgestaltet sein, dass die Schaltglieder in einer Schaltgliedaufnahme 14 eines Kupplungsgliedes, bevorzugt des lastaufnehmenden Kupplungsgliedes, oder des Zwischenglieds frei derart aufgenommen sind, dass sich die Schaltglieder im Lastfall lediglich über äußere Anlageflächen gegen das oder die angrenzenden Bauteile (gegen das Kupplungsglied selbst und/oder gegen das Zwischenglied) abstützen. Die (gedachte) Schwenkachse 4 wird dann durch die Anlagen definiert, die das jeweilige Schaltglied mit den angrenzenden Bauteilen bildet. Die Schaltgliedaufnahme ist bevorzugt von einer taschenartigen Vertiefung in einem Kupplungsglied, insbesondere dem momentaufnehmenden Kupplungsglied, oder einer taschenartigen Vertiefung oder einem Durchbruch in dem Zwischenglied gebildet.

Es sei darauf hingewiesen, dass die Anordnungen bzw. die Zuordnungen der einzelnen Funktionselemente der Freilaufkupplung, insbesondere die Anordnung bzw. Zuordnung der Schraubverzahnung, der Steuerklinke, des Stellglieds, der Stellkanten des Stellanschlags und des Sperrteils mit seinen Sperrelementen an dem einen oder dem anderen Kupplungsglied oder dem Zwischenglied, sowie die Fragen, ob das momenteinleitende oder das momentaufnehmende Kupplungsglied im Überlappungsbereich innen- oder außenliegend zu dem jeweils anderen Kupplungsglied angeordnet ist, und welche der Verzahnungstypen radial außenseitig oder radial innenseitig an den Funktionsteilen vorgesehen sind, für die Beibehaltung der Grundfunktion der beschriebenen Freilaufkupplung und für die im Sinne der Erfindung als vorteilhaft beschriebene konstruktiven Ausgestaltung nicht zwingend vorgegeben sind und nicht notwendigerweise so, wie in den Figuren beispielhaft gezeigt, vorgesehen sein müssen. Durch Änderung der Anordnung bzw. Zuordnung der einzelnen funktionalen Elemente gegenüber der in den Figuren gezeigten Ausgestaltung wird der Gegenstand der Erfindung nicht verlassen.

Es sei nochmals darauf hingewiesen, dass die Freilaufkupplung, so wie in den Figuren gezeigt, als Rücklaufsperre konzipiert sein kann. Die Freilaufkupplung kann aber auch als Überholkupplung konzipiert sein, bei der ein Kupplungsteil das andere einer Lastübertragungsrichtung M drehend antreibt und in einer Freilaufrichtung F zu überholen vermag.

### Bezugszeichenliste

- 1: momenteinleitendes Kupplungsglied
- 2: momentaufnehmendes Kupplungsglied
- 3: Schaltglied (Sperrklinke)
- 4: Schwenkachse
- 5: Stellglied (Reibring)
- 6: Zwischenelement (Stellhebel)
- 7: Stellanschlag
- 7/7: Stellkante
- 8/8: Vorspannelement (Zugfeder/Druckfeder)
- 9: Anschläge eines Anschlagkranzes
- 10: Schaltglied (Sperrbolzen)
- 11: Verzahnung
- 12/12: Führungsflächen
- 13: Sperrbolzenaufnahme
- 14: Schaltgliedaufnahme
- 21: momenteinleitendes Kupplungsglied
- 22: momentaufnehmendes Kupplungsglied
- 23: Zwischenglied
- 24: äußere Schraubverzahnung am Zwischenglied
- 24: innere Schraubverzahnung am ersten Kupplungsglied
- 25: Innenverzahnung am Zwischenglied
- 25: Außenverzahnung am zweiten Kupplungsglied
- 26: Sperrteil (Sperrring)
- 27: Sperrteilverzahnung
- 28: Sperrteil-Aktuatorik
- 29: Schaltglied (Steuerglied)
- 30: Wälzlager
- 33: Ausnehmung
- 34: Reibglieder
- 35: Trägerring
- 36, 36: Arretierungsmittel
- 37: Vorspannelemente (Druckfedern)
- 38: Vorspannelement (Biegesteg)
- 39: Seitenarme
- M: Lastdrehrichtung
- F: Freilaufdrehrichtung

## Patentansprüche

1. Freilaufkupplung mit einem momenteinleitenden Kupplungsglied (1), einem momentaufnehmenden Kupplungsglied (2) und mit einem Schaltglied (3, 10, 29), das abhängig von der Richtung einer hinreichenden Änderung der zwischen momenteinleitendem Kupplungsglied (1) und momentaufnehmenden Kupplungsglied (2) herrschenden Drehwinkelstellung mittels einer von einem Stellglied (5) auf das Schaltglied (3, 10, 29) ausgeübten Stellkraft aus einer Eingriffsstellung in eine Freilaufstellung gedrängt wird, um einen freies Drehen der Kupplungsglieder (1, 2) zueinander in einer Freilaufdrehrichtung mittelbar oder unmittelbar herzustellen, oder aus einer Freilaufstellung in eine Eingriffsstellung gedrängt wird, um eine drehfeste Kopplung der Kupplungsglieder (1, 2) mittelbar oder unmittelbar herzustellen, **dadurch gekennzeichnet, dass** die Stellkraft eine reibkraftinduzierte Stellkraft ist, die durch eine Reibkraftpaarung zwischen Stellglied (5) und einem hierzu in Reibkontakt stehenden Bauteil der Freilaufkupplung induziert ist und dass das Stellglied (5) einen formschlüssig wirkenden Stellanschlag (7) ausbildet, über den die Stellkraft mittelbar oder unmittelbar auf das Schaltglied (3, 10, 29) wirkt.

2. Freilaufkupplung nach Anspruch 1, **dadurch gekennzeichnet, dass** das Schaltglied (3) an einem vom Stellglied (5) separaten Bauteil der Freilaufkupplung positionsgelagert ist.

3. Freilaufkupplung nach einem der vorhergehenden Ansprüche, **dadurch gekennzeichnet, dass**
das Schaltglied als Steuerglied (29) ausgeführt ist und die freie Drehbarkeit der Kupplungsglieder (1, 2) zueinander oder eine drehfeste Kopplung zwischen den Kupplungsgliedern (1, 2) mittelbar dadurch herstellt, dass es die Überführung eines Zwischenglieds (23) aus einer lastübertragenden Stellung in eine freilaufgewährende Stellung (oder umgekehrt) initiiert,
**oder dass**
das Schaltglied als lastabstützendes Sperrglied (3, 10) ausgeführt ist und die freie Drehbarkeit der Kupplungsglieder (1, 2) zueinander oder eine drehfeste Kopplung zwischen den Kupplungsgliedern (1, 2) unmittelbar dadurch herstellt, dass es selbst zwischen Eingriffsstellung und Freilaufstellung hin und her wechselt.

4. Freilaufkupplung nach einem der vorhergehenden Ansprüche, **dadurch gekennzeichnet, dass** das Stellglied (5) mit dem momenteinleitenden Kupplungsglied (1) oder einem mit dem momenteinleitenden Kupplungsglied (1) drehfest verbundenen Bauteil eine Reibpaarung bildet und das Schaltglied (3, 10, 29) am momentaufnehmenden Kupplungsglied (2), einem mit dem momentaufnehmendem Kupplungsglied (2) drehfest verbundenen Bauteil oder an einem mit dem momentaufnehmenden Kupplungsglied (2) in Eingriff stehenden Zwischenglied (29) positionsgelagert ist.

5. Freilaufkupplung nach einem der vorhergehenden Ansprüche, **dadurch gekennzeichnet, dass** das Stellglied (5) und das Schaltglied (3, 10, 29) derart zusammenwirken, dass bei in Freilaufdrehrichtung beanspruchter Freilaufkupplung das Stellglied (5) und das Schaltglied (3, 10, 29) zusammen mit dem momentaufnehmenden Kupplungsglied (2) drehen oder stillstehen, während das momenteinleitende Kupplungsglied (1) gegenüber dem Stellglied (5) rotiert.

6. Freilaufkupplung nach einem der vorhergehenden Ansprüche, **dadurch gekennzeichnet, dass** am Stellglied (5) ein oder mehrere die Reibkraft beeinflussende bzw. bestimmende Vorspannelemente (8', 8", 37, 38) vorgesehen sind, wobei bevorzugt das Stellglied (5) die Vorspannelemente (8', 8", 37, 38) umfasst.

7. Freilaufkupplung nach einem der vorhergehenden Ansprüche, **dadurch gekennzeichnet, dass** das Stellglied (5) radial innerhalb oder radial außerhalb einer Schwenkachse (4) des Schaltglieds (3, 29) angeordnet ist.

8. Freilaufkupplung nach einem der vorhergehenden Ansprüche, **dadurch gekennzeichnet, dass** das Stellglied (5) als Reibring ausgeführt ist und eine nach außen weisende Radialfläche eines inneren Kupplungsglieds außenseitig umspannt oder innenseitig einer radial nach innen weisenden Radialfläche eines äußeren Kupplungsglieds in das äußere Kupplungsglied eingepasst ist.

9. Freilaufkupplung nach einem der vorhergehenden Ansprüche, **dadurch gekennzeichnet, dass** die Reibkrafterzeugung zwischen Stellglied (5) und dem zum Stellglied (5) benachbarten Bauteil der Freilaufkupplung über Paarungen von zueinander benachbarten Axialflächen und/oder über Paarungen von zueinander benachbarten Radialflächen erfolgt.

10. Freilaufkupplung nach einem der vorhergehenden Ansprüche, **dadurch gekennzeichnet, dass** die Kupplungsglieder (1, 2) ein äußeres Kupplungsglied und ein inneres Kupplungsglied umfassen und das äußere Kupplungsglied das inneren Kupplungsglied unter Bildung eines zwischen äußerem und innerem Kupplungsglied befindlichen Ringraums übergreift, wobei das Stellglied (5) zumindest teilweise innerhalb dieses Ringraums angeordnet ist.

11. Freilaufkupplung nach einem der vorhergehenden Ansprüche, **dadurch gekennzeichnet, dass** das Stellglied (5) zumindest teilweise radial innenseitig innerhalb einer an einem äußeren Kupplungsglied vorgesehenen und bei in Lastdrehrichtung M beanspruchter Kupplung momentübertragenden Eingriffsbreite (B) angeordnet ist.

12. Freilaufkupplung nach einem der vorhergehenden Ansprüche, **dadurch gekennzeichnet, dass** zur Ausbildung des Stellanschlags (7) am Stellglied (5) zwei in entgegengesetzte Richtungen wirkende Stellkanten (7'/7") am Stellglied (5) ausgebildet, die zur mittelbaren oder unmittelbaren Einleitung der Stellkraft auf das Schaltglied (3, 10, 29) mit dem Schaltglied (3, 10, 29) oder mit einem mit dem Schaltglied zusammenwirkenden Zwischenelement (6) formschlüssig in Anlage kommen.

13. Freilaufkupplung nach einem der vorhergehenden Ansprüche, **dadurch gekennzeichnet, dass** bei einem Übergang der Freilaufkupplung aus der Freilaufstellung in die Eingriffsstellung oder aus einer Eingriffsstellung in die Freilaufstellung das Schaltglied (10) relativ zu einem Kupplungsglied (2) translatorisch bewegt oder verschenkt wird.

14. Freilaufkupplung nach dem vorhergehenden Anspruch, **dadurch gekennzeichnet, dass** das Kupplungsglied (2), relativ zu dem das Schaltglied (10) translatorisch bewegt oder verschwenkt wird, das nicht mit dem Stellglied (5) in Reibkontakt stehende Kupplungsglied ist.

15. Freilaufkupplung nach einem der vorhergehenden Ansprüche, **dadurch gekennzeichnet, dass** das Stellglied (5) das Schaltglied (3, 10, 29) innerhalb einer Schaltgliedaufnahme (13, 14) translatorisch bewegt oder verschwenkt, die als taschenartige Vertiefung in dem Kupplungsglied vorgesehen ist, das nicht mit dem Stellglied (5) in Reibkontakt steht, oder die als taschenartige Vertiefung oder als Durchbruch in einem Zwischenglied (23) vorgesehen ist.

## Claims

1. An overrunning clutch having a torque-introducing clutch member (1), a torque-receiving clutch member (2), and having a switching member (3, 10, 29) which, as a function of the direction of an adequate change in the rotation-angle position prevalent between the torque-introducing clutch member (1) and the torque-receiving clutch member (2), by means of an actuating force exerted on the switching member (3, 10, 29) by an actuator (5) is urged from an engagement position to an overrun position so as to indirectly or directly establish free mutual rotation of the clutch members (1, 2) in an overrun rotation direction, or from an overrun position is urged to an engagement position so as to indirectly or directly establish a rotationally fixed coupling of the clutch members (1, 2), **characterized in that** the actuating force is a friction-force-induced actuating force which is induced by a friction-force pairing between the actuator (5) and a component of the overrunning clutch that is in frictional contact with said actuator (5), and **in that** the actuator (5) configures an actuation detent (7) which acts in a form-fitting manner and by way of which the actuating force acts indirectly or directly on the switching member (3, 10, 29).

2. The overrunning clutch as claimed in claim 1, **characterized in that** the switching member (3) is positionally mounted on a component of the overrunning clutch that is separate from the actuator (5).

3. The overrunning clutch as claimed in one of the preceding claims, **characterized in that** the switching member is configured as a control member (29) and establishes the free mutual rotatability of the clutch members (1, 2), or a rotationally fixed coupling between the clutch members (1, 2), indirectly **in that** said switching member initiates the transfer of an intermediate member (23) from a load-transmitting position to an overrun-permitting position (or vice versa) or that the switching member is embodied as a load-supporting locking member (3, 10) and establishes the free mutual rotatability of the clutch members (1, 2), or a rotationally fixed coupling between the clutch members (1, 2), directly **in that** said switching member per se alternates between the engagement position and the overrun position.

4. The overrunning clutch as claimed in one of the preceding claims, **characterized in that** the actuator (5), conjointly with the torque-introducing clutch member (1) or a component that is rotationally fixed to the torque-introducing clutch member (1), forms a friction pairing, and the switching member (3, 10, 29) is positionally mounted on the torque-receiving clutch member (2), a component that is rotationally fixed to the torque-receiving clutch member (2), or an intermediate member (9) that engages with the torque-receiving clutch member (2).

5. The overrunning clutch as claimed in one of the preceding claims, **characterized in that** the actuator (5) and the switching member (3, 10, 29) interact in such a manner that the actuator (5) and the switching member (3, 10, 29) when the overrunning clutch is being utilized in the overrun rotation direction rotate or stop conjointly with the torque-receiving clutch member (2), while the torque-introducing clutch member (1) rotates in relation to the actuator (5).

6. The overrunning clutch as claimed in one of the preceding claims, **characterized in that** one or a plurality of pre-tensioning elements (8, 8, 37, 38) that influence or determine, respectively, the friction force are provided on the actuator (5), wherein the actuator (5) preferably comprises pre-tensioning elements (8, 8, 37, 38).

7. The overrunning clutch as claimed in one of the preceding claims, **characterized in that** the actuator (5) is disposed radially within or radially outside a pivot axis (4) of the switching member (3, 29).

8. The overrunning clutch as claimed in one of the preceding claims, **characterized in that** the actuator (5) is embodied as a friction ring and encompasses externally an outwardly facing radial face of an internal clutch member, or is tightly fitted in an external clutch member on the internal side of a radially inward facing radial face of the external clutch member.

9. The overrunning clutch as claimed in one of the preceding claims, **characterized in that** the generation of friction force between the actuator (5) and the component of the overrunning clutch that neighbors the actuator (5) takes place by way of pairings of mutually neighboring axial faces and/or by way of pairings of mutually neighboring radial faces.

10. The overrunning clutch as claimed in one of the preceding claims, **characterized in that** the clutch members (1, 2) comprise an external clutch member and an internal clutch member, and the external clutch member, while forming an annular space situated between the external and the internal clutch member, engages across the internal clutch member, wherein the actuator (5) is at least in part disposed within said annular space.

11. The overrunning clutch as claimed in one of the preceding claims, **characterized in that** the actuator (5) is at least in part disposed radially on the inside within an engagement width (B) which is provided on an external clutch member and is torque-transmitting when the clutch is being stressed in the load rotation direction M.

12. The overrunning clutch as claimed in one of the preceding claims, **characterized in that**, for configuring the actuation detent (7) on the actuator (5), two actuation edges (7/7) which act in opposite directions and which for introducing the actuating force indirectly or directly onto the switching member (3, 10, 29) come to bear in a form-fitting manner on the switching member (3, 10, 29) or an intermediate element (6) that interacts with the switching member, are configured on the actuator (5).

13. The overrunning clutch as claimed in one of the preceding claims, **characterized in that** the switching member (10), when the overrunning clutch is transitioning from the overrun position to the engagement position or from the engagement position to the overrun position, is moved in a translatory manner, or pivoted, relative to a clutch member (2).

14. The overrunning clutch as claimed in the preceding claim, **characterized in that** the clutch member (2) relative to which the switching member (10) is moved in a translatory manner or pivoted, is that clutch member that is not in frictional contact with the actuator (5).

15. The overrunning clutch as claimed in one of the preceding claims, **characterized in that** the actuator (5) moves in a translatory manner, or pivots, the switching member (3, 10, 29) within a switching member receptacle (13, 14) which is provided as a pocket-type depression in the clutch member which is not in frictional contact with the actuator (5), or which is provided as a pocket-type depression or a cutout in an intermediate member (23).

## Revendications

1. Embrayage à roue libre comprenant un l'élément d'embrayage initiant un couple (1), un élément d'embrayage recevant un couple (2) et un élément de commutation (3, 10, 29) qui est poussé d'une position engagée à une position de roue libre par une force d'actionnement exercée par un actionneur (5) sur l'élément de commutation (3, 10, 29) en réponse au sens d'un changement suffisant de la position angulaire entre l'élément d'embrayage initiant un couple (1) et l'élément d'embrayage recevant un couple (2) afin de produire indirectement ou directement une rotation libre des éléments d'embrayage (1, 2) l'un par rapport à l'autre dans un sens de roue libre, ou est poussée d'une position de roue libre dans une position d'engagement afin de produire indirectement ou directement un accouplement fixe en rotation des éléments d'embrayage (1, 2), **caractérisée en ce que** la force d'actionnement est une force d'actionnement induite par une force de frottement qui est induite par un appariement de forces de frottement entre l'actionneur (5) et un composant de l'embrayage à roue libre qui est en contact de frottement avec celui-ci, et **en ce que** l'actionneur (5) forme une butée d'actionnement (7) à action positive par l'intermédiaire de laquelle la force d'actionnement agit indirectement ou directement sur l'élément de commutation (3, 10, 29).

2. Embrayage à roue libre selon la revendication 1, **caractérisé en ce que** l'élément de commutation (3) est monté en position sur un composant de l'embrayage à roue libre qui est séparé de l'élément d'actionnement (5).

3. Embrayage à roue libre selon l'une des revendications précédentes, **caractérisé en ce que** l'élément de commutation est conçu comme un élément de commande (29) et établit indirectement la libre rotation des éléments d'embrayage (1, 2) l'un par rapport à l'autre ou un accouplement fixe en rotation des éléments d'embrayage (1, 2) en déclenchant le transfert d'un élément intermédiaire (23) d'une position de transmission de charge à une position de roue libre (ou inversement), ou **en ce que** l'élément de commutation est conçu comme un l'élément de verrouillage (3, 10) supportant une charge et établit directement la libre rotation des éléments d'embrayage (1, 2) l'un par rapport à l'autre ou un accouplement fixe en rotation des éléments d'embrayage (1, 2) en passant lui-même d'une position d'engagement à une position de roue libre.

4. Embrayage à roue libre selon l'une des revendications précédentes, **caractérisé en ce que** l'actionneur (5) forme un couple de friction avec l'élément d'embrayage initiant un couple (1) ou un composant relié de manière fixe en rotation à l'élément d'embrayage initiant un couple (1) et l' élément de commutation (3, 10, 29) est monté en position sur l'élément d'embrayage recevant un couple (2), un composant relié à l'élément d'embrayage recevant un couple (2) de manière fixe en rotation ou sur un élément intermédiaire (29) en prise avec l'élément d'embrayage recevant un couple (2).

5. Embrayage à roue libre selon l'une des revendications précédentes, **caractérisé en ce que** l'actionneur (5) et l'élément de commutation (3, 10, 29) interagissent de telle sorte que, lorsque l'embrayage à roue libre est chargé dans le sens de la rotation de la roue libre, l'actionneur (5) et l'élément de commutation (3, 10, 29) tournent conjointement avec l'élément d'embrayage recevant un couple (2) ou sont fixes, tandis que l'élément d'embrayage initiant un couple (1) tourne par rapport à l'actionneur (5).

6. Embrayage à roue libre selon l'une des revendications précédentes, **caractérisé en ce qu'**un ou plusieurs éléments de précontrainte (8', 8", 37, 38) influençant ou déterminant la force de frottement sont prévus sur l'actionneur (5), l'actionneur (5) comprenant de préférence les éléments de précontrainte (8', 8", 37, 38).

7. Embrayage à roue libre selon l'une des revendications précédentes, **caractérisé en ce que** l'actionneur (5) est disposé radialement à l'intérieur ou radialement à l'extérieur d'un axe de pivotement (4) de l'élément de commutation (3, 29).

8. Embrayage à roue libre selon l'une des revendications précédentes, **caractérisé en ce que** l'actionneur (5) est conçu comme une bague de friction et couvre une surface radiale orientée vers l'extérieur d'un élément d'embrayage intérieur à l'extérieur ou est monté dans l'élément d'embrayage extérieur à l'intérieur d'une surface radiale orientée vers l'intérieur d'un élément d'embrayage extérieur.

9. Embrayage à roue libre selon l'une des revendications précédentes, **caractérisé en ce que** la force de frottement est générée entre l'actionneur (5) et le composant de l'embrayage à roue libre adjacent à l'actionneur (5) par l'intermédiaire de paires de surfaces axiales mutuellement adjacentes et/ou par l'intermédiaire de paires de surfaces radiales mutuellement adjacentes.

10. Embrayage à roue libre selon l'une des revendications précédentes, **caractérisé en ce que** les éléments d'embrayage (1, 2) comprennent un élément d'embrayage extérieur et un élément d'embrayage intérieur, et l'élément d'embrayage extérieur s'engage sur l'élément d'embrayage intérieur pour former un espace annulaire situé entre les éléments d'embrayage extérieur et intérieur, l'actionneur (5) étant disposé au moins partiellement à l'intérieur de cet espace annulaire.

11. Embrayage à roue libre selon l'une des revendications précédentes, **caractérisé en ce que** l'actionneur (5) est disposé au moins partiellement radialement à l'intérieur d'une largeur d'engagement (B) prévue sur un élément d'embrayage extérieur et transmettant un couple lorsque l'embrayage est chargé dans le sens de rotation de la charge M.

12. Embrayage à roue libre selon l'une des revendications précédentes, **caractérisé en ce que**, pour former la butée d'actionnement (7) sur l'actionneur (5), deux arêtes d'actionnement (7'/7") qui agissent en sens inverse sont formées sur l'actionneur (5) et, pour introduire la force d'actionnement directement ou indirectement sur l'élément de commutation (3, 10, 29), entrent en contact par complémentarité de forme avec l'élément de commutation (3, 10, 29) ou avec un élément intermédiaire (6) qui interagit avec l'élément de commutation (3, 10, 29).

13. Embrayage à roue libre selon l'une des revendications précédentes, **caractérisé en ce que**, lors d'un passage de l'embrayage à roue libre de la position de roue libre à la position d'engagement ou d'une position d'engagement à la position de roue libre, l'élément de commutation (10) est déplacé ou pivoté en translation par rapport à un élément d'embrayage (2).

14. Embrayage à roue libre selon la revendication précédente, **caractérisé en ce que** l'élément d'embrayage (2) par rapport auquel l'élément de commutation (10) est déplacé en translation ou pivoté est l'élément d'embrayage non en contact de friction avec l'actionneur (5).

15. Embrayage à roue libre selon l'une des revendications précédentes, **caractérisé en ce que** l'actionneur (5) déplace ou fait pivoter en translation l'élément de commutation (3, 10, 29) à l'intérieur d'un logement d'élément de commutation (13, 14) qui est prévu comme un évidement en forme de poche dans l'élément d'embrayage sans contact de friction avec l'actionneur (5), ou qui est prévu comme un évidement en forme de poche ou comme une ouverture dans un élément intermédiaire (23).
